(19) Europäisches Patentamt
European Patent Office
Office européen des brevets

(11) **EP 2 368 216 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
***G06K 9/62*** *(2006.01)*  ***G06K 9/00*** *(2006.01)*
***G06T 7/00*** *(2006.01)*

(21) Anmeldenummer: **09783576.3**

(22) Anmeldetag: **30.09.2009**

(86) Internationale Anmeldenummer:
**PCT/EP2009/062654**

(87) Internationale Veröffentlichungsnummer:
**WO 2010/040668 (15.04.2010 Gazette 2010/15)**

(54) **VERFAHREN UND EINRICHTUNG ZUR ANALYSE VON UMGEBUNGSOBJEKTEN UND/ODER UMGEBUNGSSSZENEN, WIE ZUR OBJEKT- UND SZENENKLASSENSEGMENTIERUNG**

METHOD AND DEVICE FOR ANALYZING SURROUNDING OBJECTS AND/OR SURROUNDING SCENES, SUCH AS FOR OBJECT AND SCENE CLASS SEGMENTING

PROCÉDÉ ET DISPOSITIF POUR L'ANALYSE D'OBJETS ENVIRONNANTS ET/OU DE SCÈNES ENVIRONNANTES AINSI QUE POUR LA SEGMENTATION EN CLASSE D'OBJETS ET DE SCÈNES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.10.2008 EP 08400043**

(43) Veröffentlichungstag der Anmeldung:
**28.09.2011 Patentblatt 2011/39**

(73) Patentinhaber: **ADC Automotive Distance Control Systems GmbH**
**88131 Lindau (DE)**

(72) Erfinder:
• **LÜKE, Stefan**
  **57462 Olpe (DE)**
• **SCHIELE, Bernt**
  **64291 Darmstadt (DE)**
• **WOJEK, Christian**
  **64293 Darmstadt (DE)**

(74) Vertreter: **Büchner, Jörg**
**Conti Temic microelectronic GmbH**
**Patente & Lizenzen**
**Sieboldstraße 19**
**90411 Nürnberg (DE)**

(56) Entgegenhaltungen:

• WINN J ET AL: "The Layout Consistent Random Field for Recognizing and Segmenting Partially Occluded Objects" COMPUTER VISION AND PATTERN RECOGNITION, 2006 IEEE COMPUTER SOCIETY CO NFERENCE ON NEW YORK, NY, USA 17-22 JUNE 2006, PISCATAWAY, NJ, USA, IEEE, PISCATAWAY, NJ, USA, Bd. 1, 17. Juni 2006 (2006-06-17), Seiten 37-44, XP010922730 ISBN: 978-0-7695-2597-6
• YANG WANG ET AL: "A Dynamic Conditional Random Field Model for Object Segmentation in Image Sequences" COMPUTER VISION AND PATTERN RECOGNITION, 2005 IEEE COMPUTER SOCIETY CONFERENCE ON, IEEE, PISCATAWAY, NJ, USA, Bd. 1, 20. Juni 2005 (2005-06-20), Seiten 264-270, XP010817441 ISBN: 978-0-7695-2372-9
• XIAOXU MA ET AL: "Learning coupled conditional random field for image decomposition with application on object categorization" COMPUTER VISION AND PATTERN RECOGNITION, 2008. CVPR 2008. IEEE CONFERENCE ON, IEEE, PISCATAWAY, NJ, USA, 23. Juni 2008 (2008-06-23), Seiten 1-8, XP031297151 ISBN: 978-1-4244-2242-5
• NICOLAS S ET AL: "Document Image Segmentation Using a 2D Conditional Random Field Model" DOCUMENT ANALYSIS AND RECOGNITION, 2007. ICDAR 2007. NINTH INTERNATIONAL CONFERENCE ON, IEEE, PISCATAWAY, NJ, USA, 1. September 2007 (2007-09-01), Seiten 407-411, XP031157572 ISBN: 978-0-7695-2822-9

**Beschreibung**

Die Erfindung betrifft Verfahren zur Analyse von Umgebungsobjekten und/oder Umgebungsszenen mit einer Auswerteeinheit gemäß Anspruch 1 , eine Objektdetektions-Einrichtung zur Analyse von Umgebungsobjekten und/oder Umgebungsszenen mit einer Datenverarbeitungs- und/oder Auswerte-Einrichtung gemäß Anspruch 9 sowie ein Fahrzeug mit einer Objektdetektions-Einrichtung zur Analyse von Umgebungsobjekten und/oder Umgebungsszenen mit einer Datenverarbeitungs- und/oder Auswerte-Einrichtung gemäß Anspruch 10, wobei jeweils in der Auswerteeinheit bzw. Datenverarbeitungs- und/oder Auswerte-Einrichtung Bilddaten ausgewertet werden.

Die Erfindung betrifft insbesondere ein Verfahren zur Objekt- und Szenenklassensegmetierung aus einer Bildfolge. Die Erfindung findet z. B. Anwendung in Kraftfahrzeugen, die mit einem Sensorsystem zur Erfassung und Analyse der Fahrzeugumgebung ausgestattet sind.

Zur Bildanalyse sind als Stand der Technik Methoden bekannt, die eine pixelweise Auswertung vorsehen. Z.B. wird häufig ein Markov Modell bzw. ein CRF (Conditional Random Field) Modell benutzt. Diese Modelle berechnen die Abhängigkeiten von benachbarten Pixeln (Knoten). Die Information, die sich lokal aus einem Bildbereich extrahieren lässt ist in der Standardformulierung eines CRF Modells jedoch begrenzt. Paarweise Kantenpotentiale sind zu schwach um Interaktionen in großer räumlicher Entfernung zu modellieren. Idealerweise, würde man eine komplette, dicht besetzte Lage mit unobservierbaren Knoten für alle Positionen und Skalen zum CRF-Standardmodell hinzufügen. Inferenzen in einem solchen Modell zu berechnen wäre jedoch aufgrund des benötigten Rechenaufwands sehr zeitaufwändig bzw. sehr teuer.

Aufgabe der vorliegenden Erfindung ist es daher, den vorgenannten bzw. den im nachfolgenden Text nochmals genauer erläuterten vorbekannten Stand der Technik zu verbessern.

Diese Aufgabe wird durch Verfahren zur Analyse von Umgebungsobjekten und/oder Umgebungsszenen mit einer Auswerteeinheit mit den Merkmalen nach Anspruch 1 eine Objektdetektions-Einrichtung zur Analyse von Umgebungsobjekten und/oder Umgebungsszenen mit einer Datenverarbeitungs- und/oder Auswerte-Einrichtung nach Anspruch 9 und ein Fahrzeug mit einer Objektdetektions-Einrichtung zur Analyse von Umgebungsobjekten und/oder Umgebungsszenen mit einer Datenverarbeitungs- und/oder Auswerte-Einrichtung mit den Merkmalen nach Anspruch 10 gelöst.

Die Lösung dieser Aufgabe erfolgt durch ein automatisiertes Verfahren bzw. eine entsprechende Anordnung, d.h. elektronisch mit Hilfe einer geeigneten Elektronik und/oder sensorisch mit Hilfe einer geeigneten Sensorik und/oder datenverarbeitungstechnisch (Software) mit Hilfe einer geeigneten Datenverarbeitungseinrichtung und/oder Datenspeichervorrichtung. Es kann hierbei ein Objektdetektor für Bilddaten, implementiert als geeignete Detektor-Hardware bzw. Detektor-Elektronik oder auch als Detektor-Software verwendet werden. Die Erfindung ist allerdings nicht darauf beschränkt, es kann ebenso beispielsweise ein Lasersensor, Radarsensor oder eine Kombination von Sensoren dafür verwendet werden. Die Erfindung kann insbesondere in einem Fahrzeug mit Hilfe von Sensoren oder Kameras als Vorverarbeitungs-Hardware zur Lieferung von Eingangsdaten und/oder Eingangsbildern und/oder Eingangsvideos für die erfindungsgemäßen Gegenstände bzw. Verfahren realisiert werden. Weiter können Datenbanken oder ähnliche Datenspeicher verwendet werden, um diese Eingangsdaten und/oder Eingangsbildern und/oder Eingangsvideos zu speichern und/oder Vergleichsdaten und/oder Vergleichsbilder und/oder Vergleichsklassen für die erfindungsgemäßen Gegenstände bzw. Verfahren - insbesondere zur Objekt- und Szenenklassensegmentierung - zu liefern.

Weitere Ausgestaltungen der Erfindung ergeben sich aus den abhängigen Ansprüchen.

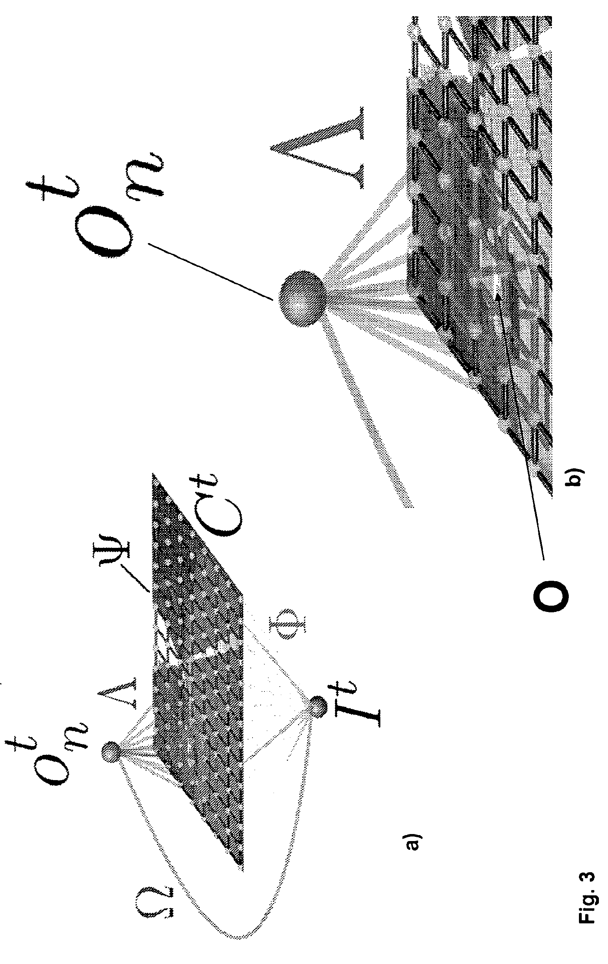

Es ist deshalb ein erster Gedanke der hier vorliegenden Erfindung, an einzelnen dedizierten Stellen einzelne Knoten einzufügen, wie in Fig. 3 gezeigt. Um diese Knoten zu instanziieren wird ein beliebiger Objektdetektor wie z.B ein Mehrskalenobjektdetektor verwendet. Ein weiterer Gedanke ist, dass neben dem Datenausgang bzw. Ergebnis aus einem Objektdetektor gemäß der Erfindung auch noch die Konsistenz einer Texturklassifikation mit einfließt z.B. die Konsistenz einer Texturklassifikation in dem nachfolgend dargestellten Knotennetzwerk geprüft wird.

Zum weiteren Verständnis werden weitere Gedanken der Erfindung im Folgenden beschrieben.

Eine pixelweise Segmentierung eines Eingabevideobilds in Klassen wie Strasse, Fahrzeug, Randstreifen/Fahrbahnmarkierung oder Gebüsch/Wald ermöglicht im Nahbereich ein komplettes bildbasiertes Szenenverständnis und damit zum Beispiel die Berechnung des Aktionsraums für Ausweichmanöver in Notfallsituationen. Im Rahmen der Erfindung wird eine neue Variante des Conditional Random Field (CRF) Frameworks vorgeschlagen. Diese ermöglicht neben der Verwendung lokaler Low-Level-Merkmale (wie z.B. Filterbankantworten) auch die Verwendung von detektierten Objekten sowie den zeitlichen Verlauf von Eingabebildern, um die Segmentierung zu unterstützen. Diese Gedanken der Erfindung sollen im Folgenden in drei Stufen erläutert werden. Nach einer kurzen Einführung des Basismodells wird dieses in den darauf folgenden Abschnitten zunächst um zusätzliche Wahrscheinlichkeitsvariablen für die Repräsentation von Objekten erweitert. Daran anschließend wird eine dynamische Erweiterung für die Inferenz über mehrere Eingabebilder hinweg vorgeschlagen. Für eine eingehendere Beschreibung der Modelle sei auf Wojek und Schiele [4a] verwiesen.

Conditional Random Field Basismodell

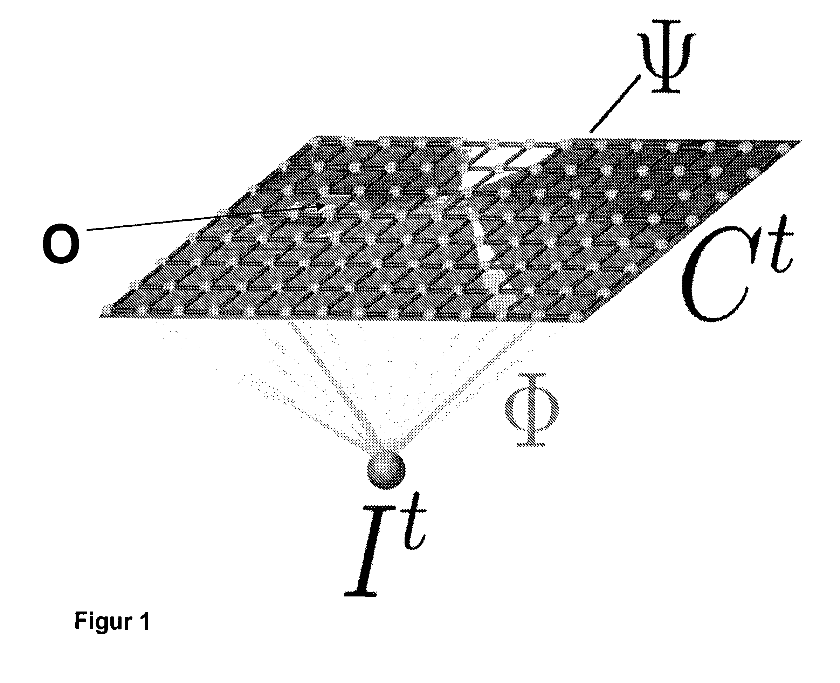

Seien die Zufallsvariablen $I^t = \{i_1^t,...,i_N^t\}$ das Eingabebild zum Zeitpunkt t und $C^t = \{C_1^t,...,c_M^t\}$ die Menge der Knoten für die eine Segmentierung bestimmt werden soll, so modellieren CRFs basierend auf der Markovannahme die bedingte Wahrscheinlichkeit einer Segmentierung $P(C^t|I^t)$ für ein statisches Bild. Fig. 1 zeigt das zugehörige graphische Modell. Während die Knotenpotentiale $\Phi$ auf Basis von Filterbankantworten und anschließender Klassifikation mit Joint Boosting [2a] gebildet werden, erlauben die paarweisen Potentiale $\Psi$ das Modellieren von Nachbarschaftsbeziehungen. Diese werden aus der Statistik eines Trainingsdatensatzes mit Hilfe eines Gradientenabstiegsverfahrens automatisch erlernt. Eine näherungsweise Lösung des Inferenzproblems ist beispielsweise mittels Loopy Belief Propagation möglich aber nicht darauf begrenzt.

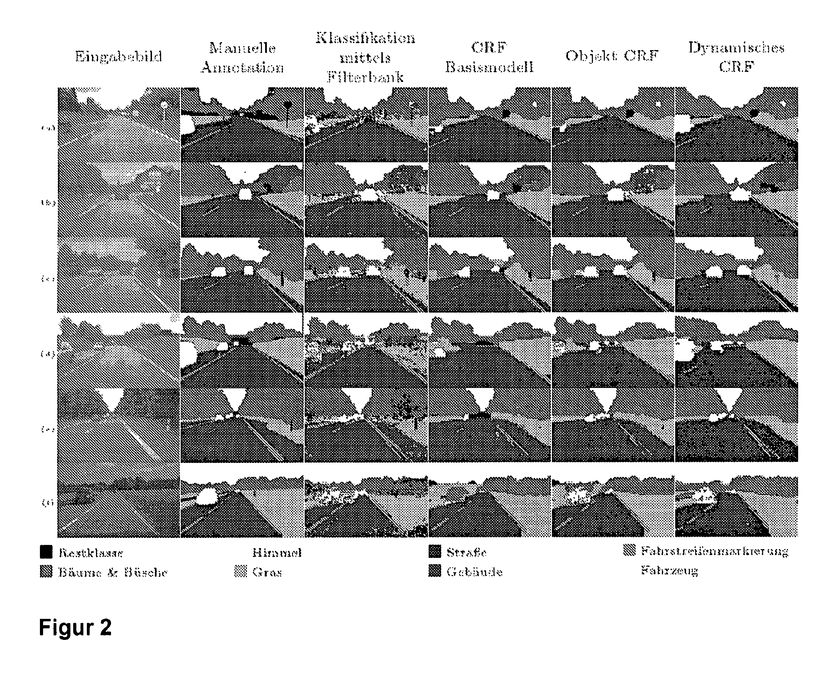

Fig. 2 zeigt einige Beispielergebnisse, wobei die Ergebnisse der filterbankgestützten Klassifikation in Spalte 3 und die Ergebnisse des CRF Basismodells in Spalte 4 gezeigt werden. Es ist ersichtlich, dass die Verwendung eines CRF zwar ein deutlich geglättetes Ergebnis zur Folge hat, aber Probleme für die Fahrzeugklasse auftreten, die oftmals durch andere Klassen überschrieben wird. Dies liegt im Wesentlichen in der Lokalität der Filterbankmerkmale begründet.

Objekt CRF

Im Gegensatz zu Filterbankmerkmalen werden Merkmale für die Detektion von Objekten (z.B. Dalal und Triggs [1 a]) über einen größeren Bildbereich berechnet und erlauben deshalb zuverlässigere Ergebnisse insbesondere für rigide Objektklassen wie zum Beispiel Fahrzeuge. Das CRF Basismodell lässt sich durch das Einfügen zusätzlicher Zufallsvariablen erweitern, um den Objektdetektor für die Szenensegmentierung auszunutzen. Dabei wird insbesondere pro Objektdetektion eine zusätzliche Zufallsvariable $o_n^t$ an der entsprechenden Stelle im Gitter (wie in Fig. 3 gezeigt) eingefügt. Sie gibt die Wahrscheinlichkeit für das Vorhandensein eines Fahrzeugs an der entsprechenden Stelle im Bild an. Zusätzliche Potentiale $\Omega$ und $\Lambda$ können dazu verwendet werden, um die Konfidenz des Objektdetekors bzw. die Konsistenz eines hypothetisierten Objekts mit der Filterbankantwort zu modellieren (vgl. Winn und Shotton[3a]). Somit ist die Verwendung des Potentials $\Omega$ zumindest Teil-Funktion eines Objektdetektors. Aus Spalte 5 in Fig. 2 wird ersichtlich, dass sich durch die zusätzlichen Zufallsvariablen die Segmentierungsgenauigkeit für Fahrzeuge deutlich verbessert. Dennoch kommt es aber zu Fehlern falls eine Detektion von Fahrzeugen nicht möglich ist (z.B. am Bildrand). Eine zeitdynamische Erweiterung des Modells kann dem jedoch Abhilfe schaffen.

Dynamisches CRF

Für hochdynamische Szenen wie beispielsweise Überholszenen gilt es zunächst zu beachten, dass die Bewegungsgeschwindigkeit im Bild für Fahrzeuge und die Hintergrundklassen im Bild höchst unterschiedlich sind. Folglich müssen diese unterschiedlich modelliert werden. So können nach der Erfindung insbesondere Fahrzeugobjekte z.B. mit einem Kalman Filter verfolgt werden. Dabei wird insbesondere die a posteriori Wahrscheinlichkeitsverteilung $P(C^t|I^t)$ der Segmentierung zum Zeitpunkt t als a priori Verteilung $P(C^{t+1})$ für das nächste Eingabebild propagiert. Die Zufallsvariablen $o_n^t$ für die Repräsentation von Objekten werden insbesondere anstatt aus Detektion aus den Kalman Filter Tracks instanziiert.

Die letzte Spalte in Fig. 2 zeigt, dass das dynamische CRF Modell nun auch Fahrzeuge, die zeitweise nicht detektiert werden können, besser segmentieren kann.

Mit der Erfindung konnte beispielsweise insgesamt auf einem repräsentativen Datensatz bestehend aus 88 Sequenzen von jeweils elf aufeinanderfolgenden Bildern eine pixelweise Segmentierungsgenauigkeit von 88,1 % erreicht werden.

Die vorliegende Erfindung betrifft gemäß einer Ausführungsform ein Verfahren zur Analyse von Umgebungsobjekten und/oder Umgebungsszenen mit einer Auswerteeinheit,
wobei in der Auswerteeinheit Bilddaten basierend auf einem CRF-Modell ausgewertet werden und das CRF-Modell zusätzliche Objektknoten vorsieht, die Informationen aus einem Objektdetektor berücksichtigen.

Eine weitere Ausführungsform der Erfindung betrifft ein Verfahren zur Analyse von Umgebungsobjekten und/ oder Umgebungsszenen mit einer Auswerteeinheit, wobei in der Auswerteeinheit Bilddaten basierend auf einem CRF-Modell ausgewertet werden, wobei eine gemeinsame Segmentierung von Objekt- und Szenenklassen erfolgt und dynamische Informationen im Rahmen der Objektdetektion wie auch der Szenenklassifizierung integriert werden.

Vorteile und spezielle Ausgestaltungen der genannten Ausführungsformen werden im weiteren Text beschrieben.

So sieht eine Ausgestaltung vor, dass im Rahmen der Analyse von Umgebungsobjekten und/oder Umgebungsszenen eine Modellierung von Nachbarschaftsbeziehungen ($N_2$, $N_3$) von Knoten des CRF-Modells erfolgt.

Eine weitere Ausgestaltung der Erfindung sieht vor, dass die Modellierung von Nachbarschaftsbeziehungen ($N_2$, $N_3$) durch Kantenpotentiale erfolgt.

Eine weitere Ausgestaltung der Erfindung sieht vor, dass im Rahmen der Analyse von Umgebungsobjekten und/oder Umgebungsszenen zusätzlich eine Support Vektor Maschine zur Objektdetektion und/oder zur Objektklassifizierung verwendet wird.

Eine weitere Ausgestaltung der Erfindung sieht vor, dass aufbauend auf dem CRF-Modell im Rahmen der Objektdetektion und/oder der Szenenklassifizierung bewegte Kameras und/oder bewegte Objekte modelliert werden.

Eine weitere Ausgestaltung sieht vor, dass Objekte und Szenen in einem gemeinsamen Segmentierungs-Schritt (Labeling Approach) modelliert werden, wobei die Modellierung auf zwei verschiedenen Modell-Lagen mit verschiedener Informationskörnigkeit (Information Granularity) und verschiedenen Segmentierungen in einem dynamischen CRF-Modell erfolgt. Dabei kann insbesondere vorgesehen werden, dass zumindest eine zweite Modell-Lage mit reduzierter Informationskörnigkeit verwendet wird um Objektknoten zu repräsentieren und das Verfahren auf Basis von dynamischen Bildsequenzen durchgeführt werden, die beliebig große Objekte enthalten.

Eine weitere Ausgestaltung der Erfindung sieht vor, dass eine pixelweise Objekt- und/oder Szenenklassensegmentierung erfolgt.

Eine weitere Ausgestaltung der Erfindung sieht vor, dass Objekte beliebiger Größe in ein CRF-Framework integriert werden, und Inferenz gemeinsam für Objekte und Kontext und/oder Szenenklassen ausgeführt wird.

Eine weitere Ausgestaltung der Erfindung sieht vor, dass Kantenpotentiale modelliert werden, wobei eine von einem Objektdetektor gelieferte Skala berücksichtigt oder ausgewertet wird.

Eine weitere Ausführungsform der Erfindung betrifft eine Objektdetektions-Einrichtung zur Analyse von Umgebungsobjekten und/oder Umgebungsszenen mit einer Datenverarbeitungs- und/oder Auswerte-Einrichtung, wobei in der einer Datenverarbeitungs- und/oder Auswerte-Einrichtung Bilddaten basierend auf einem CRF-Modell ausgewertet werden und das CRF-Modell zusätzliche Objektknoten vorsieht, die Informationen aus einem Objekdetektor berücksichtigen.

Eine weitere Ausführungsform der Erfindung betrifft ein Fahrzeug mit einer Objektdetektions-Einrichtung zur Analyse von Umgebungsobjekten und/oder Umgebungsszenen, mit einer Datenverarbeitungs- und/oder Auswerte-Einrichtung, wobei in der Datenverarbeitungs- und/oder Auswerte-Einrichtung Bilddaten basierend auf einem CRF-Modell ausgewertet werden und das CRF-Modell zusätzliche Objektknoten vorsieht, die Informationen aus einem Objekdetektor berücksichtigen, mit einer Datenspeichervorrichtung zur Speicherung von Bilddaten, die mit der Objektdetektions-Einrichtung und/oder mit der Datenverarbeitungs- und/oder Auswerte-Einrichtung datentechnisch verbunden ist.

Vorteile und spezielle Ausgestaltungen auch dieser genannten Ausführungsformen werden im weiteren Text beschrieben. Insbesondere können diese Ausführungsformen speziell zur Durchführung eines vorgenannten Verfahrens ausgebildet sein und auch nach weiteren vorher oder nachfolgend beschriebenen Merkmalen weitergebildet sein.

Eine weitere Ausgestaltung der Erfindung sieht vor, dass die Objektdetektions-Einrichtung in eine Kamera-Einrichtung oder in eine SensorEinrichtung integriert ist.

Weitere Vorteile und Anwendungsmöglichkeiten der vorliegenden Erfindung ergeben sich aus der nachfolgenden Beschreibung in Verbindung mit dem/den in der/den Zeichnung(en) dargestellten Ausführungsbeispiel(en).

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in

Fig. 1:             Graphische Darstellung des CRF-Basismodells

Fig. 2:             Beispielergebnisse für verschiedene Klassifikationen bzw. CRF-Modelle

Fig. 3 (a) und (b):    Graphische Darstellung des Objekt-CRF-Modells, mit Ausschnittvergrößerung in Fig. 3 (b)

Fig. 4 (a):          Alternative Darstellung eines graphischen Models für das Objekt-CRF. Unterschiedliche Kantenfärbungen beschreiben unterschiedliche Potentiale

Fig. 4 (b):          Graphisches Modell für das volle dynamische CRF. Beobachtete Knoten sind grau, nicht beobachtbare Variablen sind weiß. Zur besseren Lesbarkeit wurde das räumliche Layout von $y^t$ mit dem zugehörigen Kantenpotential $\Psi$ weggelassen.

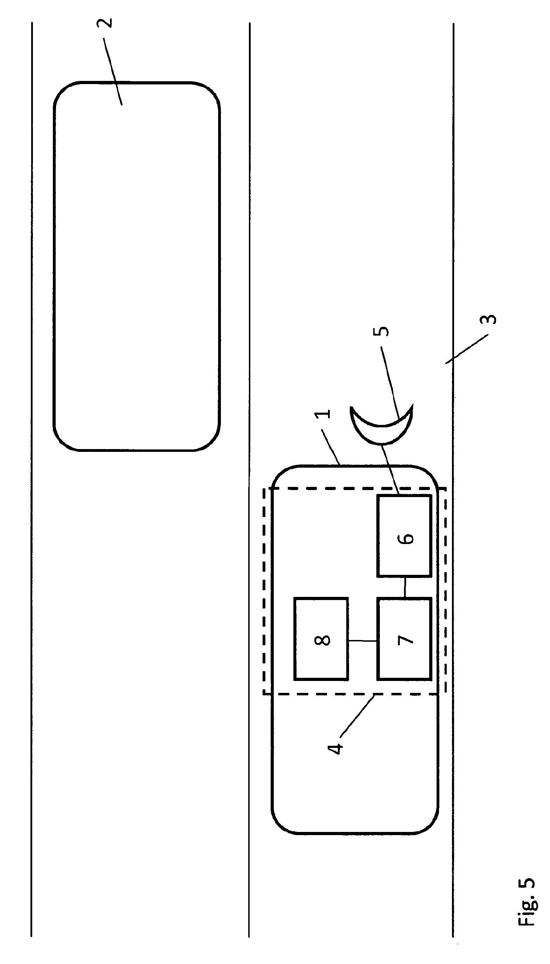

Fig. 5:             Schematische Darstellung einer erfindungsgemäß ausgebildeten Einrichtung für ein Fahrzeug

Fig. 6:             Experimentelle Ergebnisse auf Basis des Sowerby-Datensatzes mit Standard CRF Klassifikation

Fig. 7:             Auswerteergebnis mit Standard CRF-Klassifikation, mit CRF mit zusätzlichem Objektknoten und mit dynamischem CRF.

Im Folgenden können gleiche und/oder funktional gleiche Elemente mit den gleichen Bezugzeichen versehen sein. Die im Folgenden angegebenen absoluten Werte und Maßangaben sind nur beispielhafte Werte und stellen keine Einschränkung der Erfindung auf derartige Dimensionen dar.

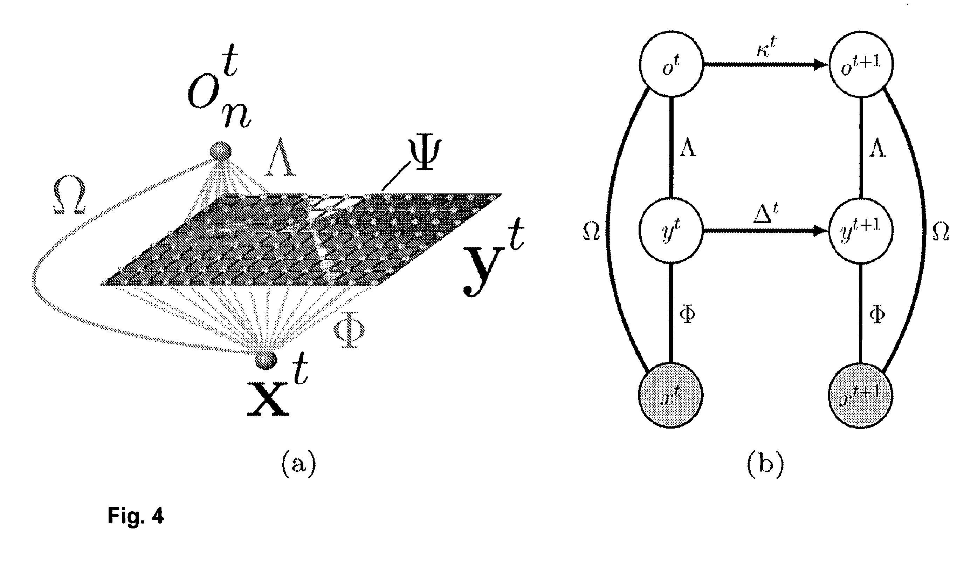

Fig. 1 zeigt ein Basis-CRF-Modell. Dagegen zeigen Fig. 3 und 4 ein CRF-Modell mit zusätzlichem Objektknoten $o^t_n$. Dieser Knoten wurde dem Standard CRF-Modell hinzugefügt: X repräsentiert das Eingabebild, $\Omega$ die Eingabedaten bzw. das Objektpotential, Y eine Variable für Klassen z.B. Straße, Markierung, Gebäude, Vegetation, Himmel, etc., $o^t_n$ repräsentiert zu detektierende Objekte O wie z.B. Auto, LKW, etc.

Die zusätzlichen Knoten beziehen Informationen zum Aussehen von Objekten aus einem starken räumlichen Modell und zusätzlich aus ihrer Umgebung. Diese enthält alle unterliegenden Knoten, die die Objekthypothese stützen der $\gamma$-Lage.

Die eingefügten Knoten besitzen mehrere Zustände, wobei die Zahl der Zustände bestimmt ist durch die Anzahl der detektierten Objektklassen. Entweder es handelt sich bei einem Zustand um eine echte Objekthypothese einer Objektklasse oder um Hintergrund. Exemplarisch wird für ein Modell mit zwei Zustände gezeigt, wie sich die Energieformulierung aus der Gleichung in Fig. 4 durch die Einführung zweier zusätzlicher Potentiale wie folgt zum Objekt-CRF verändert:

$$\log(P_{oCRF}(\mathbf{y}^t, \mathbf{o}^t|\mathbf{x}^t, \Theta)) = \log(P_{pCRF}(\mathbf{y}^t|\mathbf{x}^t, N_2, \Theta)) + \sum_n \Omega(o^t_n, \mathbf{x}^t; \Theta_\Omega) + \sum_{(i,j,n)\in N_3} \Lambda(y^t_i, y^t_j, o^t_n, \mathbf{x}^t; \Theta_\Psi)$$

Dabei bezeichnet $N_2 \subset N_1$ alle Nachbarschaftsbeziehungen an denen kein Objekt im Bild sichtbar ist, wohingegen $N_3$ alle Nachbarschaftsbeziehungen zwischen den beiden Lagen bezeichnet an Stellen, an denen eine Objektdetektion vorliegt. $\Omega$ ist das neue Knotenpotential, wohingegen $\Lambda$ das Kantenpotential für Kanten zwischen den beiden Lagen ist.

Objektknotenpotential

Um ein Objektknotenpotential zu modellieren wird ein beliebiger Objektdetektor genutzt. Z.B. kommt ein HOG Mehrskalen-Sliding-Window Objektdetektor nach Dalal&Triggs (CVPR 2005) zu Einsatz, wobei die Merkmale eines Fensters in einer vorteilhaften Ausgestaltung durch $g(\{x^t\}_{o_n})$ definiert sind und z.B. mittels einer linearen Support Vektor Maschine (SVM) in Objekt und Hintergrund klassifiziert werden. Die Gewichte der SVM sind dabei v, die Achsenverschiebung b. Um eine probabilistische Interpretation für die Klassifikationskonfidenz zu bekommen, wird z.B. die Methode nach Platt (Advances in Large Margin Classifiers 2000) verwendet und ein Sigmoidmodell mit Parametern $s_1$ und $s_2$ mittels Kreuzvalidierung angepasst.

$$\Omega(o^t_n, \mathbf{x}^t; \Theta_\Omega) = \log \frac{1}{1 + \exp(s_1 \cdot (\mathbf{v}^T \cdot \mathbf{g}(\{\mathbf{x}^t\})_{o_n} + b) + s_2)}$$

Kantenpotentiale zwischen Lagen

Zwischen den Lagen werden die Nachbarschaftsbeziehungen durch Kantenpotentiale, die z.B. über dem Objektknoten $o^t_n$ und zwei unterliegenden Knoten der y-Lage $y^t_i$, $y^t_j$ definiert sind, modelliert. Wie auf der y-Lage wird die Stärke der Interaktion mit einem linearen Klassifikator mit Gewichten $\Theta_\Lambda = u$ bestimmt.

$$A(y^t_i, y^t_j, o^t_n, \mathbf{x}^t; \Theta_A) = \sum_{(k,l)\in C; m\in O} \mathbf{u}^T \begin{pmatrix} 1 \\ \mathbf{d}^t_{ij} \end{pmatrix} \delta(y^t_i = k)\delta(y^t_j = l)\delta(o^t_n = m)$$

Zudem können die durch den Objektdetektor bestimmten Objektskalen ausgenutzt werden, um für Hypothesen unterschiedler Skalen unterschiedliche Gewichte zu trainieren. Dadurch lässt sich ein echtes CRF-Mehrskalenmodell realisieren. Außerdem verwenden wir unterschiedliche Gewichte für unterschiedliche Teile des Modells und modellieren dadurch einen konsistenten Objektaufbau.

Dynamisches CRF: Zweilagiges Objekt-CRF zur gleichzeitigen Inferenz von Objekt- und Szenenklassensegmentierung

Obwohl die zusätzliche Information aus dem Objektdetektor die Segmentierung bereits verbessert, kann diese insbesondere durch zeitdynamische Modellierung weiter verbessert werden. An dieser Stelle schlagen wir zwei Erweiterungen für das soweit entwickelte Modell vor. Für hochdynamische Szenen - wie sie zum Beispiel Bildsequenzen aus einem fahrenden Auto - ist zu beachten, dass Objekte eine von der Szene wesentlich unterschiedliche Dynamik besitzen. Folglich sollte diese auch unterschiedlich modelliert werden.

Für Objekte wird die Relativgeschwindigkeit geschätzt und die Objekte werden in 3D-Weltkoordinaten mittels eines temporalen Filters getrackt. Die Dynamik der Restszene wird hauptsächlich durch die Eigenbewegung der Kamera verursacht. Daher werden die Inferenzergebnisse aus Zeitschritt t als Prior für den darauf folgenden Zeitschritt t+1 verwendet.

Objektdynamikmodell

Für das Objekttracking wird vorzugsweise je Objekt ein Kalmanfilter verwendet. Durch die bekannte Kamerakalibrierung wird das Tracken in 3D durch die Annahme, dass die Objekte sich auf der gleichen Grundfläche befinden ermöglicht. Zusätzlich enthält der Statusvektor die Objektbreite, die Objektgeschwindigkeit und die Neigung der Kamera, sowie die ersten Ableitungen.

Es kann z.B. ein lineares Bewegungsmodell verwendet werden, wobei die Objektbeschleunigung als Systemrauschen beschrieben wird. Die Konfidenz der Objekthypothesen ist durch die Konfidenz der letzten assoziierten Messung gegeben. Dadurch ergibt sich folgendes Modell:

$$\log(P_{tCRF}(\mathbf{y}^t, \mathbf{o}^t | \mathbf{x}^t, \Theta)) = \log(P_{pCRF}(\mathbf{y}^t | \mathbf{x}^t, N_2, \Theta)) + \sum_n \kappa^t(o_n^t, \mathbf{o}^{t-1}, \mathbf{x}^t; \Theta_\kappa)) + \sum_{(i,j,n) \in N_3} A(y_i^t, y_j^t, o_n^t, \mathbf{x}^t; \Theta_A)$$

Hierbei bezeichnet $\kappa^t$ die Wahrscheinlichkeit einer Objekthypothese $o_n^t$ zum Zeitpunkt t, gegeben die Historie von Eingabebildem. Es ersetzt das zuvor eingeführte Potential $\Omega$.

Szenendynamikmodell

Im Sinne der rekursiven Bayes'schen Zustandsschätzung unter einer Markovannahme wird die a Posteriori-Verteilung $y^{t-1}$ im Zeitschritt t-1 als a Priori-Verteilung für den Zeitschritt t aufgefasst. Jedoch muss für dynamische Szene der Bildinhalt passend an das zu Grunde liegende Gitter angepasst werden um die einzelnen Bildpunkte mit der korrekten a Prioriverteilung zu assoziieren. An dieser Stelle wird die Annahme einer flachen Welt getroffen und eine Projektionsmatrix Q aus der Kamerageschwindigkeit und der Kalibrierung geschätzt. Dadurch erhält man das folgende Modell:

$$\log(P_{dCRF}(\mathbf{y}^t, \mathbf{o}^t, \mathbf{x}^t | \mathbf{y}^{t-1}, \mathbf{o}^{t-1}, \Theta)) = \log(P_{tCRF}(\mathbf{y}^t, \mathbf{o}^t | \mathbf{x}^t, \Theta)) + \sum_i \Delta^t(y_i^t, \mathbf{y}^{t-1}; \Theta_{\Delta^t})$$

Weitere Ausgestaltungen der Erfindung sind dem folgenden Text zu entnehmen:

Objektdetektion und pixelweise Szenensegmentierung (Scene Labelling) waren beide in den letzten Jahren sehr aktive Forschungsgebiete und beeindruckende Resultate wurden für beide Aufgaben getrennt voneinander berichtet. Die Integration dieser verschiedenen Arten von Lösungsansätzen sollte die Leistungsfähigkeit für beide Aufgaben verstärken, da die Objektdetektion von einer leistungsfähigen Szenensegmentierung (Scene Labelling) und auch eine pixelweise Szenensegmentierung (Scene Labelling) kann von einer leistungsfähigen Objektdetektion profitieren. Folglich wurden erste Lösungsansätze vorgeschlagen die darauf abzielen, sowohl Objektdetektion als auch Szenensegmentierung (Scene Labelling) in einen gemeinsamen Framework zu integrieren. Die Erfindung schlägt einen neuen Lösungsansatz vor, basierend auf Conditional Random Field (CRF)-Modellen, der die existierenden Arbeiten erweitert durch 1) Formulierung der Intergration als gemeinsames Segmentierungsproblem von Objekt- und Szenenklassen und 2) systematische Integration von dynamischer Information für die Objektdetektionsaufgabe wie auch für die Szenensegmentierungsaufgabe. Im Ergebnis ist der Lösungsansatz anwendbar für hochdynamische Szenen einschließlich sowohl schneller Kamerabewegungen als auch schneller Objektbewegungen. Experimente zeigen die Anwendbarkeit des neuen Lösungsansatzes auf herausfordernde Videosequenzen der realen Welt und analysieren systematisch den Beitrag verschiedener Systemkomponenten zur Gesamt-Leistungsfähigkeit.

Heute sind Objektklassen-Detektionsmethoden dazu in der Lage, beeindruckende Resultate bei herausfordernden Datensätzen zu erzielen (z.B. PASCAL-Wettbewerb [1]). Oft kombinieren diese Methoden leistungsfähige Merkmalsvektoren wie SIFT oder HOG mit der Leistungsfähigkeit von diskriminativen Klassifikatoren wie SVMs und AdaBoost. Zur selben Zeit haben mehrere Autoren argumentiert, dass globaler Szenenkontext [2, 3] ein wertvoller Input (Cue) für die Objektdetektion ist und sollte daher benutzt werden um Objektdetektion zu unterstützen. Diese kontextbezogene Arbeit hat sich dagegen fast ausschließlich mit statischen Szenen beschäftigt. Da diese Erfindung sich spezifisch mit hochdynamischen Szenen beschäftig, wird auch die Objektbewegung modelliert als zusätzlicher und wichtiger Input für die Detektion.

Pixelweise Szenensegmentierung (Scene Labelling) war in letzter Zeit ebenfalls ein aktives Forschungsfeld. Ein üblicher Lösungsansatz ist die Verwendung von Markov- oder Conditional Random Field (CRF)-Modellen um die Leistungsfähigkeit durch Modellierung von Nachbarschaftsabhängigkeiten zu verbessern. Mehrere Autoren haben die implizite Darstellung (Notion) von Objekten in CRF-Modelle eingeführt [4-7]. Die Interaktionen zwischen Objektknoten und Szenensegmentierungen (Scene Labels) sind dagegen oft auf einen unidirektionale Informationsfluss beschränkt und daher haben diese Modelle noch nicht das volle Potential der simultanen Betrachtung von Objekten und Szenen gezeigt. Durch die Formulierung dieses Problems als ein gemeinsames Klassifizierungsproblem für Objekt- und Szenenklassen führt diese Erfindung eine allgemeinere Darstellung der Objekt-Szene-Interaktion ein, der einen bidirektionalen Informationsfluss ermöglicht. Nachdem das Interesse auf dynamische Szenen liegt, wird außerdem die Darstellung von dynamischen CRFs [8] verwendet, welche erweitert werden um sowohl mit bewegten Kameras als auch mit bewegten Objekten umzugehen.

Daher wird als Lösungsansatz vorgeschlagen, Objekte und Szenenklassen in hochdynamischen Szenen gemeinsam zu segmentieren wofür ein neuer Realwelt-Datensatz eingeführt wird mit pixelweiser Handsegmentierung. Hochdynamische Szenen sind nicht nur eine wissenschaftliche Herausforderung, sondern auch ein wichtiges Problem, z.B. für Anwendungen wie autonomes Fahren oder Videoindizierung wo sowohl die Kamera als auch die Objekte sich unabhängig voneinander bewegen. Die Formulierung des Problems als ein gemeinsames Segmentierungsproblem erlaubt 1) die Dynamik der Szene und des Objekts getrennt voneinander zu modellieren, was von besonderer Bedeutung für das Szenario von Objekten und Kamera, die sich unabhängig voneinander bewegen und 2) einen bidirektionalen Informationsfluss zwischen Objekt- und Szeneklassensegmentierung zu erlauben.

Der Rest der vorliegenden Beschreibung ist wie folgt strukturiert: Sektion 2 betrachtet verwandte Arbeiten auf dem Gebiet der Szenensegmentierung und Szenenanalyse in Verbindung mit Objektdetektion. Sektion 3 führt den erfindungsgemäßen Lösungsansatz ein und diskutiert wie Objektdetektion und Szenensegmentierung integriert werden können als gemeinsames Segmentierungsproblem in einer dynamischen CRF-Formulierung. Sektion 4 führt die angewandten Merkmale (Features) ein, beschreibt Details zu den Experimenten und zeigt experimentelle Ergebnisse. Schließlich zieht Sektion 5 Schlussfolgerungen.

2. Verwandte Arbeiten

In den letzten Jahren sind Conditional Random Fields (CRFs) [9] ein populäres Framework für Bildsegmentierung (Image Labeling) und Szenenverständnis geworden. Dagegen gibt es nach bestem Wissen der Erfinder keine Arbeit, die explizit Objekteinheiten in dynamischen Szenen modelliert. Hiermit wird vorgeschlagen, Objekte und Szenen in einem gemeinsamen Segmentierungs-Ansatz (Labeling Approach) zu modellieren, und zwar auf zwei verschiedenen Ebenen bzw. Lagen mit verschiedener Informationskörnigkeit (Information Granularity) und verschiedenen Segmentierungen in einem dynamischen CRF [8].

Verwandte Arbeiten können grob in zwei Gruppen geteilt werden. Zum einen gibt es verwandte Arbeiten über CRF-Modelle für Szenenverständnis, und zum zweiten gibt es Lösungsansätze um Objektdetektion und Szenenverständnis zu integrieren.

In [10] detektieren Kumar und Herbert vom Menschen geschaffene Strukturen in Naturszenen unter Verwendung eines einschichtigen CRF. Später erweitern Sie diese Arbeit, um mit mehreren Klassen in einem zweischichtigen Framework umzugehen [5]. Kumar und Herbert untersuchten auch Objekt-Kontext-Interaktion und kombinierten einen einfachen verstärkten Objektdetektor für Seitenbeobachtung bei Autos mit Szenenkontext von Straßen und Gebäuden auf Basis einer Datenbank mit statischen Bildern und Objekten einer fixen Größe. Insbesondere lassen sie eine Inferenz separat auf ihren beiden Lagen laufen und jede Detektorhypothese wird nur in einer Nachbarschaftsrelation mit einer ganzen Region auf der zweiten Lage modelliert. Im Gegensatz dazu integriert die vorliegende Erfindung Objekte beliebiger Größe in ein CRF-Framework wobei Inferenz gemeinsam für Objekte und Kontext ausgeführt wird. Zusätzlich schlägt die Erfindung vor, Kantenpotentiale in einem konsistenten Layout dadurch zu modellierten, dass die von einem Objektdetektor nach dem Stand der Technik gelieferte Skala ausgewertet wird [11]. Torralba et al [7] verwenden AdaBoost Klassifikatoren, um unäre Potentiale und Interaktionspotentiale zu modellieren um gemeinsam Objektklassen und Szenenklassen zu segmentieren (zu labeln). Jedoch setzen die Autoren keinen Objektdetektor für ganze Objekte ein. Im Rahmen der Erfindung wurde herausgefunden, dass ein separater Objektdetektor als essentiell für verbesserte Leistungsfähigkeit ist. Torrelaba et al. verwenden außerdem jeweils separate Lagen für Objektklassen und Szenenklassen und daher ist Inferenz aufwändig wegen der hohen Graphenkonnektivität, und außerdem arbeiten sie auf einer statischen Bilddatenbank bei der die Objekte alle die selbe Größe besitzen. Die Erfindung führt eine dünn besetzte Lage ein um Objekthypothesen zu repräsentieren und arbeiten auf Basis von dynamischen Bildsequenzen, die beliebig große Objekte enthalten. Weitere Arbeiten für gleichzeitige Objekterkennung und Szenensegmentierung wurde von Shotton et al. durchgeführt [6]. Deren Fehlermatrix (Confusion Matrix) zeigt, dass in Objektklassen für die Farb- und Texturinformation oft nicht ausreichen um statische Bilder zu beschreiben - wie Boot, Stuhl, Vogel, Kuh, Schaf, Hund - es zu schlechten Resultaten kommt. Während deren Texton-Merkmale (Texton feature) Kontextinformationen sogar aus Bildpixeln mit größerer Entfernung auswerten kann, bleiben die genannten Objektklassen problematisch aufgrund der unbekannten Objektskala/Objektgröße bzw. des unbekannten Objektmaßstabs. Darüber hinaus stellen He et al. [4] ein vielskaliges CRF vor welches eine Vielzahl von Lagen beinhaltet, aufbauend auf Merkmalen (Features) von verschiedenen Skalen. Dagegen modellieren sie nicht die explizite Darstellung von Objekten und ihre Knoten höherer Lagen dienen eher als Schalter zu verschiedenen gleichzeitigen Kontext- und Objekt-Ereignissen (Co-Occurrences). Gleichermaßen fügen Verbeek und Triggs [12] Informationen über das gleichzeitige Auftreten von Klassen mit Hilfe eines Topic Model hinzu. Schließlich haben verschiedene Autoren vorgeschlagen, das CRF-Framework für Objekterkennung übernehmen als einen eigenständigen Task [13-15] ohne jede Argumentation zum Kontext und berichten lediglich Resultate für statische Bilddatenbanken mit Objekten einer Größe.

Dynamische CRFs werden von Wang und Ji [16] ausgewertet für den Zweck der Bildsegmentierung mit Intensitäts- und Bewegungsinput in weitgehend statischen Bildsequenzen. Gleichermaßen schlagen Yin und Collings [17] ein MRF mit temporalen Nachbarschaften vor für Bewegungssegmentierung mit einer bewegten Kamera.

Der zweite Teil der verwandten Arbeiten beschäftigt sich mit Szenenverständnis-Lösungsansätzen aus der Beobachtung von Objekten. Leibe et al. [18] setzen ein Stereo-Kamerasystem ein zusammen mit einem Struktur-aus-Bewegung Lösungsansatz um Fußgänger und Autos in städtischer Umgebung zu detektieren. Jedoch segmentieren sie nicht explizit die Hintergrundklassen welche für viele Anwendungen nötig sind, sogar wenn alle Objekte in der Szene bekannt sind. Hoiem et al. [3] werten die detektierten Skalen von Fußgängern und Autos zusammen mit einer groben Hintergrund-Segmentierung (Background Labelling) aus um den Kamerastandpunkt zu inferieren was wiederum die Objektdetektion mit Hilfe eines gerichteten Bayesischen Netzwerk verbessert. Im Gegensatz zu der vorliegenden Erfindung werden Objektdetektionen über den Hintergrundkontext verfeinert aber nicht umgekehrt. Auch werden nur Einzelbilder betrachtet wobei das Vorhandensein eines Objekts unterstellt wird. Gleichermaßen wertet Torralba [2] Filterbank-Antworten aus um einen Szenenprior für Objektdetektion zu erhalten.

3. Conditional Random Field-Modelle

Die folgende Sektion führt erfolgreich das Modell nach der vorliegenden Erfindung ein. Sie ist in drei Teile aufgeteilt. Der erste betrachtet einlagige CRFs, der zweite modelliert zusätzlich Objekte in einer separaten Lage und der letzte fügt die Dynamik der Objekte und der Szene hinzu.

Es wird das Eingangsbild zur Zeit t mit $x^t$ bezeichnet, die zugehörige Klassensegmentierungen (Class Labels) auf der Gitterzellenebene mit $y^t$ und die Objektsegmentierungen mit $o^t$.

3.1 Basis-CRF (plain CRF): Einlagiges CRF-Modell für

Szenenklassensegmentierung (Scene Class Labelling)

Allgemein modelliert ein CRF die bedingte Wahrscheinlichkeit aller Klassensegmentierungen $y^t$ bei einem gegebenen Eingangsbild $x^t$. Analog zu anderen wird bei der Erfindung der Satz bzw. die Menge von Nachbarschaftsbeziehungen $N_1$ bis zu paarweisen Cliquen modelliert um die Inferenz rechnerisch möglich zu halten. Daher modelliert man nach der Erfindung

$$\log(P_{pCRF}(\mathbf{y}^t|\mathbf{x}^t, N_1, \Theta)) = \sum_i \Phi(y_i^t, \mathbf{x}^t; \Theta_\Phi) + \sum_{(i,j)\in N_1} \Psi(y_i^t, y_j^t, \mathbf{x}^t; \Theta_\Psi) - \log(Z^t) \tag{1}$$

$Z^t$ bezeichnet die sogenannte Partitionsfunktion, welche zur Normalisierung benutzt wird. $N_1$ ist der Satz bzw. die Menge aller räumlichen paarweisen Nachbarschaften. Wir bezeichnen dieses Modell als Basis-CRF bzw. flaches CRF (plain CRF).

Unäre Potentiale

Die unären Potentiale nach der Erfindung modellieren lokale Merkmale für alle Klassen C einschließlich Szenen bzw. Szenenklassen wie auch Objektklassen. Dazu wird als Klassifikator Joint Boosting [19] verwendet um einen starken Klassifikator

$$H(c, \mathbf{f}(x_i^t); \Theta_\Phi) = \sum_{m=1}^{M} h_m(c, \mathbf{f}(x_i^t); \Theta_\Phi)$$

zu erlernen. Hier bezeichnet $f(x_i^t)$ die Merkmale, die aus dem Eingangsbild für den Gitterpunkt i extrahiert wurden. M ist die Zahl der Runden und c sind die Klassensegmentierungen (Class Labels), $h_m$ sind sogenannte schwache Klassifikatoren mit Parametern $\Theta_\phi$ und werden auf allen Klassen für diesen Lösungsansatz verteilt. Um die Verstärkungskonfidenz als Wahrscheinlichkeit zu interpretieren wird eine Softmax-Transformation [5] angewendet. Daher wird das Potential zu

$$\Phi(y_i^t = k, \mathbf{x}^t; \Theta_\Phi) = \log \frac{\exp H(k, \mathbf{f}(x_i^t); \Theta_\Phi)}{\sum_c \exp H(c, \mathbf{f}(x_i^t); \Theta_\Phi)} \tag{2}$$

Kantenpotentiale

Das Kantenpotentiale modellieren die Interaktion zwischen Klassensegmentierungen an zwei benachbarten Orten $y_i^t$ und $y_j^t$ in einem rechtwinkligen Gitter. Die Interaktionsstärke wird durch einen linearen diskriminativen Klassifikator mit Parametern $\Theta_\Psi = w^T$ modelliert und hängt von dem Unterschied der Knotenmerkmale (Node Features)

$$\mathbf{d}_{ij}^t := |\mathbf{f}(x_i^t) - \mathbf{f}(x_j^t)|$$

ab.

$$\Psi(y_i^t, y_j^t, \mathbf{x}^t; \Theta_\Psi) = \sum_{(k,l)\in C} \mathbf{w}^T \begin{pmatrix} 1 \\ \mathbf{d}_{ij}^t \end{pmatrix} \delta(y_i^t = k)\delta(y_j^t = l) \tag{3}$$

3.2 Objekt-CRF: Zweilagiges Objekt-CRF für gemeinsame Objekt- und Szenensegmentierung

Die Information, die lokal aus einer Bildstelle (Image Patch) entnommen werden kann, ist eher beschränkt und paarweise Kantenpotentiale sind zu schwach um Interaktionen über weitere Distanz zu modellieren. Idealerweise würde eine komplette dichte Lage von nicht beobachteten Variablen hinzugefügt um mögliche Orte und Skalen von Objekten zu codieren, aber da die Inferenz für ein solches Modell rechnerisch aufwändig wäre wird vorgeschlagen, einzelne versteckte Variablen $o^t = \{o_1^t,...,o_D^t\}$ einzubringen (wobei D die Zahl der Detektionen ist), wie in Fig. 4 (a) dargestellt. Um diese Knoten zu instanziieren kann jeder vielskalige Objektdetektor verwendet werden.
Die zusätzlichen Knoten leiten das Erscheinen eines Objekts aus einem starken räumlichen Modell ab und sind verbunden mit der Menge aller entsprechenden versteckten Variablen

$$\{\mathbf{y}^t\}_{o_n^t}$$

deren Evidenz

$$\{\mathbf{x}^t\}_{o_n^t}$$

die Objekthypothese unterstützen. Die Segmentierungen (Labels) der neuen Knoten im Rahmen dieser Erfindung bestehen aus O = {Objekt, Hintergrund}; aber die Erweiterung zu einer Vielzahl von Objektklassen ist leicht zu realisieren, weshalb die Erfindung sich auch darauf mit erstreckt. Daher werden zwei neue Potentiale in das CRF-Modell eingeführt, welches durch Gleichung (1) gegeben ist und erhalten das Objekt-CRF

$$\log(P_{oCRF}(\mathbf{y}^t, \mathbf{o}^t | \mathbf{x}^t, \Theta)) = \log(P_{pCRF}(\mathbf{y}^t | \mathbf{x}^t, N_2, \Theta)) + \qquad (4)$$
$$\sum_n \Omega(o_n^t, \mathbf{x}^t; \Theta_\Omega) + \sum_{(i,j,n) \in N_3} A(y_i^t, y_j^t, o_n^t, \mathbf{x}^t; \Theta_\Psi)$$

Es wird darauf hingewiesen dass $N_2 \subset N_1$ alle Nachbarschaften bezeichnet, bei denen kein Objekt in der Szene vorhanden ist, wobei $N_3$ alle Nachbarschaften zwischen Lagen sind mit angenommenen Objektorten. $\Omega$ ist das neue unäre Objektpotential, wogegen A das Kantenpotential zwischen Lagen ist.

Unäre Objektpotentiale

Um Objektpotentiale zu definieren wird im Rahmen der Erfindung ein Objektdetektor nach dem Stand der Technik verwendet. Insbesondere wird ein Sliding-Window-basierter Lösungsansatz [11] verwendet, wobei die Merkmale eines Fensters (Window) definiert werden durch

$$\mathbf{g}(\{\mathbf{x}^t\}_{o_n^t})$$

und klassifiziert werden mit einer linearen SVM, wobei die Gewichte v sind und b der Bias der Hyperebene (hyperplane). Um eine wahrscheinlichkeitstheoretische Interpretation für die Klassifikationsspanne (Classification Margin) zu erhalten, wird die Methode von Platt [20] übernommen und ein Sigmoid mit Parametern $s_1$ und $s_2$ angepasst unter Verwendung einer Kreuzvalidierung.

$$\Omega(o_n^t, \mathbf{x}^t; \Theta_\Omega) = \log \frac{1}{1 + \exp(s_1 \cdot (\mathbf{v}^T \cdot \mathbf{g}(\{\mathbf{x}^t\}_{o_n^t}) + b) + s_2)} \qquad (5)$$

Konsequenterweise werden die Parameter bestimmt zu

$$\Theta_\Omega = \{\mathbf{v}, b, s_1, s_2\}.$$

Kantenpotentiale zwischen Lagen (Inter-Lagen-Kantenpotentiale):

Für die Inter-Lagen-Potentiale werden die Nachbarschaftsbeziehungen in Cliquen modelliert welche aus zwei tiefer liegenden Knoten der ersten Lage $y_i^t$, $y_j^t$ und dem Objekthypothese-Knoten $o_n^t$ bestehen. Ähnlich zu den paarweisen Kantenpotentialen auf der unteren Ebene wird die Interaktionsstärke der Knoten über einen linearen Klassifikator modelliert mit Gewichten $\Theta_A = u$.

$$A(y_i^t, y_j^t, o_n^l, \mathbf{x}^t; \Theta_A) = \sum_{(k,l)\in C, m\in O} \mathbf{u}^T \begin{pmatrix} 1 \\ \mathbf{d}_{ij}^t \end{pmatrix} \delta(y_i^t = k)\delta(y_j^t = l)\delta(o_n^l = m) \quad (6)$$

Es ist wichtig festzustellen, dass die Inter-Lagen-Interaktionen anisotrop und skalenabhängig sind. Im Rahmen der Erfindung werden die vom Objektdetektor gegebenen Skalen ausgewertet um verschiedene Gewichte für verschiedene Skalen zu trainieren und somit kann eine tatsächliche vielskalige Modellierung in dem CRF-Framework erreicht werden. Darüber hinaus benutzt die Erfindung verschiedene Sätze von Gewichten für verschiedene Teile des detektierten Objekts und erzwingt damit ein objekt- und kontext-konsistentes Layout [15].

3.3 Dynamisches CRF: Dynamisches zweilagen-CRF für Objekt- und Szenenklassensegmentierung (Object and Scene Class Labelling)

Während die zusätzliche Information von einem Objektdetektor schon die Klassifikationsgenauigkeit erhöht, ist zeitliche Information ein weiterer wichtiger Input. Die Erfindung schlägt zwei zeitliche Erweiterungen für das bisher beschriebene Framework vor. Für hochdynamische Szenen - wie Bildsequenzen, die von einem fahrenden Auto aus aufgenommen werden, welches als eine Beispielanwendung für das erfindungsgemäße Modell verwendet werden soll - ist es wichtig festzustellen dass Objekte und die verbleibende Szene unterschiedliche Dynamiken besitzen und daher unterschiedlich modelliert werden sollen. Für Objekte wird deren Bewegung geschätzt und mit einem zeitlichen Filter im dreidimensionalen Raum (3D) getrackt. Die Dynamik für die verbleibende Szene wird in dem beschriebenen Beispielszenario hauptsächlich von der Kamerabewegung verursacht. Daher kann man eine Schätzung der Eigenbewegung der Kamera verwenden um die inferierten Szenensegmente (Scene Labels) zur Zeit T als Prior zum Zeitpunkt t+1 zu propagieren.

Nachdem beide - Objekt- und Szenendynamik - jeweils Informationen vorwärts zu zukünftigen Zeitpunkten transferieren, werden im Rahmen der Erfindung gerichtete Verbindungen (Directed Links) in den entsprechenden graphischen Modellen eingesetzt wie in Fig. 4 (b) gezeigt. Es ist auch möglich, ungerichtete Verbindungen (Undirected Links) einzuführen, aber diese sind rechentechnisch aufwändiger. Darüber hinaus sind diese möglicherweise aus Anwendungssicht weniger wünschenswert aufgrund des zeitlich rückwärts gerichteten Informationsflusses während eine Online-Verarbeitung gefordert wird.

Objektdynamik-Modell

Um die Objektdynamik zu modellieren werden im Rahmen der vorliegenden Erfindung eine Vielzahl erweiterter Kalman-Filter [21] eingesetzt - einen für jedes Objekt. Für den Datensatz dynamischer Szenen, der in der experimentelle Sektion des Ausführungsbeispiels beschrieben wird, ist die Kamerakalibrierung bekannte und die Sequenzen werden von einem fahrenden Auto aus aufgezeichnet. Zusätzlich wird angenommen, dass sich die Objekte auf der Erdboden-Ebene befinden. Folglich sind Kalman-Filter in der Lage, die Objektposition in 3D-Koordinaten zu modellieren. Zusätzlich enthält der Statusvektor die Breite und Geschwindigkeit des Objekts auf der Erdboden-Ebene ebenso wie die Kameraneigung und alle erste Ableitungen der Statusvariablen nach der Zeit.

Für das Bewegungsmodell werden lineare Bewegungsdynamiken verwendet, wobei die Beschleunigung als Systemrauschen modelliert wird, welches sich als ausreichend für die unten verwendete Bildsequenzen erwiesen hat. Die Konfidenzen der Spuren (Tracks) sind durch das letzte zugeordnete Detektionsergebnis gegeben. Damit erhält man das folgende integrierte Model:

$$\log(P_{tCRF}(\mathbf{y}^t, \mathbf{o}^t|\mathbf{x}^t, \Theta)) = \log(P_{pCRF}(\mathbf{y}^t|\mathbf{x}^t, N_2, \Theta)) + \qquad (7)$$
$$\sum_n \kappa^t(o_n^t, \mathbf{o}^{t-1}, \mathbf{x}^t; \Theta_\kappa) + \sum_{(i,j,n)\in N_3} A(y_i^t, y_j^t, o_n^t, \mathbf{x}^t; \Theta_A)$$

wobei $\kappa^t$ die Wahrscheinlichkeit einer Objekthypothese $o_n^t$ zu einer Zeit t modelliert bei gegebener Historie von Eingangsbildem. Es ersetzt die zuvor eingeführten Potentiale für Objekte $\Omega$. Die Parametervektoren bestehen aus den Detektorparametern und zusätzlich aus den Dynamiken des Kalman-Filters {A, W} und dem Messungs-Model {$H_t$, $V_t$} und somit gilt

$$\Theta_\kappa = \Theta_\Omega \cup \{A, W, H_t, V_t\}$$

Szenendynamik-Modell

Im Sinne einer rekursiven Bayesischen Statusschätzung unter einer MarkovAnnahme wird die Posterior-Verteilung von $y^{t-1}$ als Prior für den Zeitschritt t verwendet. Jedoch muss der Bildinhalt für dynamische Szenen transformiert werden, um die Gitterpunkte mit der richtigen Posterior-Verteilung zu verbinden. Im Rahmen der Erfindung wird die Projektion Q von $y^t$ zu $y^{t+1}$ geschätzt für eine gegebene Kamera-Translation und -Kalibrierung ($^\ominus\Delta^t$). Daher erhält man ein zusätzliches unäres Potential für $y^t$.

$$\Delta^t(y_i^t, y^{t-1}; \Theta_{\Delta^t}) = \log(P_{tCRF}(y_{Q^{-1}(i)}^{t-1}|\Theta)) \qquad (8)$$

Das komplette dynamische CRF-Modell inklusive sowohl Objektdynamik also auch Szenendynamik wie in Fig. 4 (b) dargestellt ist dann

$$\log(P_{dCRF}(\mathbf{y}^t, \mathbf{o}^t, \mathbf{x}^t|\mathbf{y}^{t-1}, \mathbf{o}^{t-1}, \Theta)) = \log(P_{tCRF}(\mathbf{y}^t, \mathbf{o}^t|\mathbf{x}^t, \Theta)) +$$
$$\sum_i \Delta^t(y_i^t, \mathbf{y}^{t-1}; \Theta_{\Delta^t}) \qquad (9)$$

3.4 Inferenz und Parameterschätzung

Für die Inferenz im ungerichteten graphischen Modellen wird eine sogenannte Sum-Product Loopy Belief Propagation mit einem parallelen Message Update Schedule verwendet. Für die Parameterschätzung wird ein stückweises Lernverfahren [22] als Lösungsansatz gewählt unter der Annahme, dass Parameter von unären Potentialen bedingt unabhängig sind von den Parametern der Kantenpotentiale. Während dies zwar nicht länger garantiert, dass die optimale Parametereinstellung für $\Theta$ gefunden werden kann, kann jedoch das Modell viel schneller gelernt werden wie in [22] diskutiert.

Daher werden vor dem Lernen der Kantenpotentialmodelle die Parameter $\Theta_\Phi$, $\Theta_\Omega$ für die unären Potentiale trainiert. Der Parametersatz $\Theta_\kappa$ für die Kalmanfilter wird z.B. von Hand auf sinnvolle Werte gesetzt, oder automatisch auf vorgespeicherte Werte.

Schließlich werden die Parametersätze $\Theta_\Psi$, $\Theta_\Lambda$ der Kantenpotentiale gemeinsam gelernt in einer maximalen Wahrscheinlichkeitseinstellung (Maximum Likelihood Setting) mit Stochastischem Meta-Descent (SMD) [23]. Wie von Vishwanathan et al. vorgeschlagen, wird ein Gaus'scher Prior angenommen mit einem Meta-Parameter $\sigma$ auf den linearen Gewichten um Overfitting zu vermeiden.

Die Realisierung der Erfindung erfolgt nach einem Ausführungsbeispiel durch ein automatisiertes Verfahren bzw. eine entsprechende Objektdetektions-Einrichtung 4 in einem Fahrzeug 1, d.h. elektronisch mit Hilfe einer geeigneten Elektronik 6, 7, 8 und sensorisch mit Hilfe einer geeigneten Sensorik 5. Datenverarbeitungstechnisch ist dabei eine geeignete Datenverarbeitungs- und/oder Auswerte-Einrichtung 6 und eine Datenspeichervorrichtung 7 vorgesehen. Es kann hierbei als Sensorik 5 ein Objektdetektor für Bilddaten, also eine geeignete Detektor-Hardware einschließlich geeigneter Detektor-Elektronik und/oder einer Detektor-Software verwendet werden. Die Erfindung ist allerdings nicht darauf beschränkt, es kann als Sensorik 5 ebenso eine Kamera, ein Lasersensor, Radarsensor oder eine Kombination von Sensoren verwendet werden. Die Erfindung wird nach dem Ausführungsbeispiel in dem Fahrzeug 1 mit Hilfe von Sensoren oder Kameras als Sensorik 5 (Eingangs-Hardware) zur Lieferung von Eingangsdaten und/oder Eingangsbildern und/oder Eingangsvideos realisiert. Diese können dann von der Datenverarbeitungs- und/oder Auswerte-Einrichtung 6 verarbeitet werden. Weiter können als Datenspeichervorrichtung 7 Datenbanken oder ähnliche Datenspeicher verwendet werden, um Vergleichsdaten und/oder Vergleichsbilder und/oder Vergleichsklassen für die erfindungsgemäßen Gegenstände bzw. Verfahren - insbesondere zur Objekt- und Szenenklassensegmentierung - zu liefern. Die erfindungsgemäße Objektdetektions-Einrichtung 4 ist speziell dafür ausgelegt und angepasst, die im Rahmen der hier beschriebenen Erfindung aufgezeigten technischen Merkmale zu realisieren, insbesondere durch entsprechend angepasste Elektronik und/oder Software, d.h. die erfindungsgemäße Einrichtung ist über eine reine Datenverarbeitungsanlage hinaus speziell angepasst für die Interaktion mit einer Sensorik 5 zur Lieferung von Eingangsdaten und/oder Eingangsbildern und/oder Eingangsvideos und für eine darauf aufbauende gemeinsame Segmentierung von Objekt- und Szenenklassen nach dem hier beschriebenen dynamischen CRF-Modell und zur Lieferung entsprechender Ausgangsdaten, die dann z.B. dem Fahrer angezeigt oder zur Aktivierung weiterer Systeme 8 wie z.B. Fahrerwarn- und/oder Fahrerassistenzsysteme und/oder Notfallsysterne verwendet werden können. Die Erfindung kann beispielsweise dazu verwendet werden, um Objekte O wie andere Fahrzeuge 2, beispielsweise auf einer Straße 3, zu detektieren.

4. Experimentelle Ergebnisse

Im nachfolgenden werden experimentelle Ergebnisse beschrieben. Um die Funktion und Leistungsfähigkeit des erfindungsgemäßen Modells zu evaluieren, wurden verschiedene Experimente auf Basis von zwei Datenbanken durchgeführt. Zuerst werden die Merkmale (Features) beschrieben, die für die textur- und ortsbasierte Klassifikation von Szenensegmenten (Scene Labels) auf der Szenensegment-CRF-Lage (Scene Label CRF Layer) durchgeführt wurden. Danach werden die Merkmale (Features) eingeführt, die für die Objektdetektion auf der Objektsegment-CRF-Lage (Object Label CRF Layer) eingesetzt wurden. Als nächstes werden kurz die Ergebnisse diskutiert die auf Basis der Sowerby-Datenbank erzielt wurden und schließlich werden die Ergebnisse aus Bildsequenzen auf einem neuen dynamischen Szenen-Datensatz vorgestellt, welcher aus Fahrzeugverkehr-Bildsequenzen besteht, die von einem fahrenden Fahrzeug 1 unter Realwelt-Bedingungen aufgenommen wurden.

4.1 Merkmale (Features) zur Szenensegmentierung (Scene Labelling)

Textur- und Positionsmerkmale (Texture and Location Features)

Für das unäre Potential $\Phi$ auf der unteren Lage wie auch für das Kantenpotential $\Psi$ und die Zwischenlagen-Potentiale A werden Texturmerkmale und Positionsmerkmale angewendet. Die Texturmerkmale werden berechnet aus den ersten 16 Koeffizienten der Walsh-Hadamard-Transformation. Diese Transformation ist eine diskrete Näherung der KosinusTransformation und kann effektiv berechnet werden [24, 25] - sogar in Echtzeit (z.B. auf moderner Graphik-Hardware). Die Merkmale werden auf einer Vielzahl von Skalen von allen Kanälen des Eingangsbildes im CIE Lab Farbraum extrahiert. Als ein Vorverarbeitungsschritt (Preprocessing), werden a- und b-Kanäle normalisiert über eine Grauwelt-Annahme um mit variierenden Farberscheinungen umgehen zu können. Der L-Kanal ist dagegen normalisiert um einer Gauss-Verteilung zu entsprechen mit einem fixen Mittel um mit globalen Beleuchtungsvariationen umgehen zu können. Es wurde im Rahmen der Erfindung ebenfalls festgestellt, dass eine Normalisierung der Koeffizienten der Transformation nach Varma und Zisserman [26] vorteilhaft ist. Sie schlagen vor für jede Filterantwort zuerst eine $L_1$-Normalisierung durchzuführen und dann lokal die Antworten bei jedem Bildpixel zu normalisieren. Als letztes wird das Mittel und die Varianz der normalisierten Antwort als Merkmale für jeden Knoten in dem regelmäßigen CRF-Gitter verwendet. Zusätzlich werden die Koordinaten der Gitterpunkte innerhalb des Bildes als Positionsmerkmal (Location Cue) verwendet. Die Pixelkoordinaten werden daher mit dem Merkmalsvektor (Feature Vector) verknüpft bzw. verkettet.

HOG

In den nachfolgend beschriebenen Experimenten wird ein HOG (Histogram of Oriented Gradients) Detektor [11] verwendet, um die Objekthypothese zu generieren. HOG ist ein Sliding Window-Lösungsansatz wobei Merkmale auf einem dichten Gitter berechnet werden. Zuerst werden Histogramme der Gradientenorientierung in Zellen berechnet, wobei eine Interpolation durchgeführt wird bezüglich des Gradientenortes und bezüglich des Betrages. Als nächstes werden benachbarte Zellen zu überlappenden Blocks gruppiert, welche normalisiert sind um Invarianz gegenüber verschiedenen Beleuchtungsverhältnissen zu erreichen. Ein beispielhafter Frontsicht- und Hecksicht-Autodetektor 4, 5 hat eine Fenstergröße von 20x20 Pixel. Er ist trainiert auf einen separaten Datensatz von Vorwärts- und Rückwärtsansichten aus einem Auto heraus, welcher 1492 Positiv-Ereignisse aus der LabelMe-Datenbank [27] und 178 Negativbilder enthält. Dieser kann z.B. in der Datenspeichervorrichtung 7 gespeichert sein.

4.2 Resultate

Sowerby-Datensatz

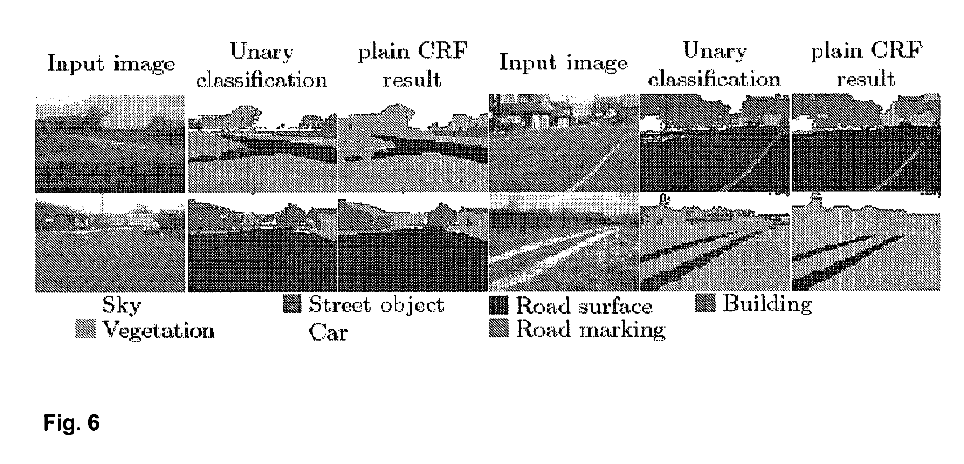

Der Sowerby-Datensatz ist ein weithin genutzter Benchmark für CRFs, welcher 7 ländliche Landschaftsklassen enthält. Der Datensatz umfasst 104 Bilder mit einer Auflösung von 96x64 Pixel. Dem Protokoll von [5] folgend wurden zufällig 60 Bilder für das Training und 44 Bilder für den Test ausgewählt. Einige Beispielbilder mit inferierten Segmenten (inferred labels) sind in Fig. 6 dargestellt. Jedoch enthält dieser Datensatz weder Bildsequenzen noch Autos die mit einem Objektdetektor detektiert werden können, und so kann das flache CRF-Modell (Gleichung 1) nur mit früheren Arbeiten auf diesem Datensatz verglichen werden.

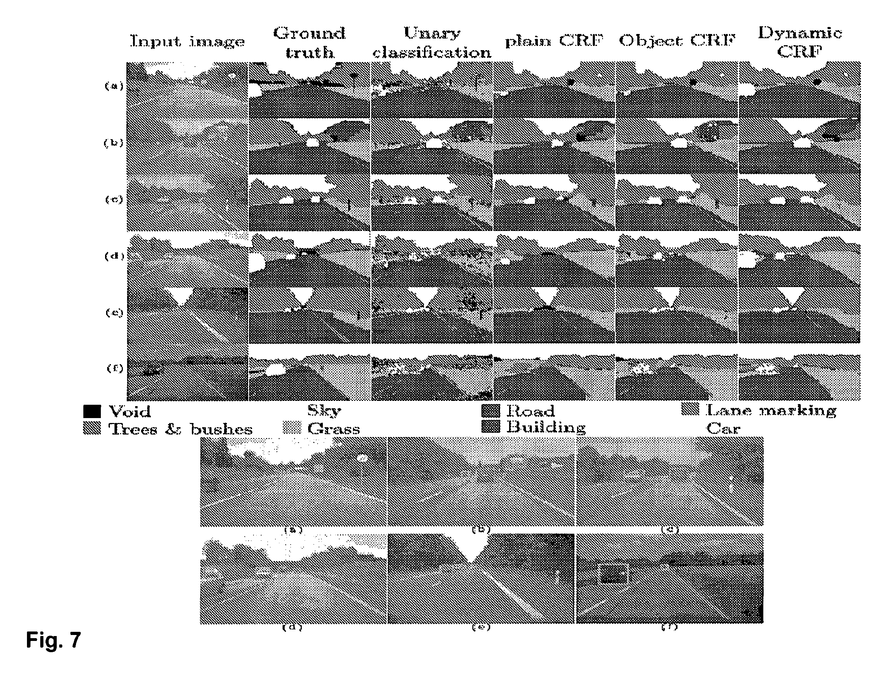

Die Experimente zeigen, dass die Merkmale und CRF-Parameterschätzung nach der Erfindung gegenüber anderen Methoden nach dem Stand der Technik wettbewerbsfähig ist. Tabelle 1 gibt eine Übersicht über kürzlich publizierte Resultate und wie sich diese im Vergleich zum erfindungsgemäßen Modell verhalten (siehe Fig. 7).

Tabelle 1: Vergleich zu früher berichteten Ergebnissen auf Basis des Sowerby-Datensatzes

| | Pixelweise Genauigkeit | |
|---|---|---|
| | Unäre Klassifikation | Basis-CRF-Model |
| He et al. [4] | 82,4% | 89,5% |
| Kumar u. Hebert [5] | 85,4% | 89,3% |
| Shotton et al. [6] | 85,6% | 88,6 % |
| Erfindung | 84,5% | 91,1 % |

Während die technisch ausgefeilteren Textons-Merkmale [6] bessere Resultate für die unäre Klassifikation liefern, kann das CRF-Modell nach der Erfindung diese übertreffen, da die Kantenpotentiale nach der Erfindung aus Trainingsdaten gelernt worden sind. Für diesen Datensatz wird ein Gitter mit einem Knoten für jedes Input-Pixel verwendet, während der Gaussche Prior σ auf 1,25 gesetzt wurde. Die Walsh-Hadamard-Transformation wurde auf den Eingangsbildern mit einer Aperturgröße von 2, 4, 8 und 16 Pixel durchgeführt. Darüber hinaus wurde ein globaler Satz von Gewichten für den isotropen linearen Klassifikator der Kantenpotentiale verwendet, aber es wird zwischen Nord-Süd-Nachbarschaftsbeziehungen und Ost-West-Nachbarschaftsbeziehungen unterschieden.

Datensatz dynamischer Szenen

Um das Objekt- und Dynamik-CRF gemäß der Erfindung zu evaluieren wird ein neuer dynamischer Szenendatensatz aufgestellt mit Bildsequenzen, die insgesamt 1936 Bilder enthalten. Die Bilder wurden von einer Kamera in einem fahrenden Auto aufgenommen und zeigen hauptsächlich ländliche Straßen mit hoher Dynamik von fahrenden Fahrzeugen bei einer Bildauflösung von 752*480 Pixeln. Fahrzeuge erscheinen in allen Skalen bzw. Maßstäben von 15 Pixel Größe bis hin zu 200 Pixel Größe. Die Datenbank enthält 176 Sequenzen mit je 11 aufeinanderfolgenden Bildern. Sie ist geteilt in gleich große Trainings- und Testsätze von 968 Bildern.
Die hier beschriebene Situation kann auch im Realbetrieb der Erfindung vorliegen, wobei die beschriebenen Bilddaten als Eingangsdaten oder als gespeicherte Daten vorliegen können.
Um die Genauigkeit der Segmentierung auf Pixelebene evaluieren zu können wird das letzte Bild (Frame) jeder Sequenz pixelweise von Hand segmentiert, während die verbleibenden nur rechteckige Annotierungen (Bounding Box Annotations) für die Frontsicht und Hecksicht Auto-Objektklassen enthalten. Insgesamt enthält der Datensatz die acht Segmentierungen "Freifläche (Void), Himmel (Sky), Straße (Road), Fahrbahnmarkierung (Lane Marking), Gebäude (Buiding), Bäume und Büsche (Trees&Bushes), Gras (Grass) und Auto (Car). Fig. 7 zeigt einige Beispielszenen. Für die folgenden Experimente wurden 8x8 Pixel für jeden CRF-Gitterknoten verwendet und Texturmerkmale (Texture Features) wurden bei Aperturgrößen von 8, 16 und 32 Pixel entnommen.
Es wird mit der Evaluierung der Leistungsfähigkeit des unären Klassifikators auf der Szenenklassen-Lage (Scene Class Layer) begonnen. Tabelle 2 listet die pixelweise Klassifizierungsgenauigkeit für verschiedene Variationen des Merkmals (Feature) auf. Wie erwartet ist die Knotenposition ein wertvoller Input (Cue), nachdem es eine hohe Variation in der Erscheinung aufgrund von verschiedenen Beleuchtungsbedingungen gibt. Diese schwanken zwischen heller und sonniger Beleuchtung mit Schattenwurf bis bewölkt. Zusätzlich komplizieren Bewegungsunschärfe und schwacher Kontrast die rein Erscheinungs-basierte Klassifikation (appearance-based Klassifikation). Außerdem ist zu beobachten, dass Normalisierung [26] ebenso wie vielskalige Merkmale (multi-scale Features) hilfreich für die Verbesserung der Klassifikationsergebnisse sind.

Tabelle 2: Evaluierung von Textur und ortsmerkmalen (Texture Location Features) basierend auf einer pixelweisen Gesamtgenauigkeit. Vielskalig schließt Merkmalsskalen (Feature Scales) von 8, 16 und 32 Pixel ein, einskalig ist eine Merkmalsskala von 8 Pixeln; es wird darauf hingewiesen, dass diese Zahlen nicht das CRF-Modell enthalten - wenn man das flache CRF (plain CRF) zur besten Konfiguration hinzufügt, dann erhält man eine Gesamtgenauigkeit von 88,3%.

| | | Normalisierung | | | |
|---|---|---|---|---|---|
| | | An | | Aus | |
| | | Mehrskalig | Einskalig | Mehrskalig | Einskalig |
| Position (Location) | An | 82,2% | 81,1% | 79,7% | 79,7% |
| | Aus | 69,1% | 64,15 | 62,35 | 62,35 |

Als nächstes wird die Leistungsfähigkeit der verschiedenen vorgeschlagenen CRF-Modelle analysiert. Auf der einen Seite wird die pixelweise Gesamtgenauigkeit dargestellt. Auf der anderen Seite ist die pixelweise Segmentierungsleistung für Auto-Objektklassen von besonderem Interesse. Insgesamt decken Auto-Pixel 1,3% der insgesamt beobachteten Pixel ab. Dennoch sind diese ein wichtiger Bruchteil für viele Applikationen und daher werden auch diese in der dargestellte Evaluierung berichtet.

Für die Experimente wurden anisotrope lineare Kantenpotential-Klassifikatoren verwendet mit 16 Parametersätzen, angeordnet in vier Zeilen und vier Spalten. Darüber hinaus wird zwischen Nord-Süd- und Ost-West-Nachbarschaften unterschieden. Für die Inter-Lagen-Kantenpotentiale wurden verschiedene Sätze von Gewichten trainiert, abhängig von der Detektionsskala, bzw. Detektionsmaßstab (disktretisiert in 6 Behältern (Bins)) und abhängig von dem Nachbarschaftsort in Bezug auf das Zentrum des Objekts.

Tabelle 3 zeigt die Erkennungsrate und die Präzision der vorgeschlagenen Modelle. Zuerst hat der verwendete Detektor eine gleichmäßige Fehlerrate von 78,8 % wenn die Auto-Detektionen nach Präzision und Erkennungsrate (Recall) evaluiert werden. Wenn diese auf einer pixelweisen Basis evaluiert werden, entspricht die Performance einer Erkennungsrate von 60,2 %. Die fehlenden 39,8 % ergeben sich überwiegend aufgrund des anspruchsvollen Datensatzes. Er enthält Autos mit schwachem Kontrast, Autos mit geringem Maßstab bzw. Skala und nur teilweise sichtbare Autos, die das Sichtfeld verlassen. Die Präzision für den Detektor auf Pixel evaluiert ist 37,7 %. Falsch klassifizierte Pixel sind hauptsächlich um echte Objekte herum und auf strukturiertem Hintergrund auf welchem der Detektor falsche Detektionen liefert.

| | Keine Objekte | | | Mit Objektlage | | | Inklusive Objektdynamik | | |
|---|---|---|---|---|---|---|---|---|---|
| | Erkennungsrate / Präzision | | Genauigkeit | Erkennungsrate / Präzision | | Genauigkeit | Erkennungsrate / Präzision | | Genauigkeit |
| CRF | 50,1% | 57,7 % | 88,3 % | 62,9% | 52,3 % | 88,6% | 70,4% | 57,8% | 87,7% |
| dyn. CRF | 25,5% | 44,8 % | 86,5 % | 75,7% | 50,8% | 87,1% | 78,0% | 51,0% | 88,1% |

Tabelle 3: Pixelweise Erkennungsrate und Präzision für die Pixel, die als Auto segmentiert wurden und Gesamtgenauigkeit für alle Klassen

Es wird nun die Leistungsfähigkeit der verschiedenen CRF-Modelle betrachtet. Ohne Information höherer Lagen von einem Objektdetektor erreichen Basis-CRFs (plain CRFs) in Kombination mit Textur- und Positionsmerkmalen (texture-location features) einen Erkennungswert von 50,1 % mit einer Präzision von 57,7 %. Die Erkennung von Autos ist in diesem Setup problematisch, da CRFs eine globale Energiefunktion optimieren, während die Autoklasse nur einen geringen Bruchteil der Daten ausmacht. Daher wird das Resultat hauptsächlich von Klassen dominiert, welche die größten Regionen wie Himmel (sky) Straße (road) und Bäume (trees) einnehmen.

Mit Objektinformationen höherer Lagen (Objekt-CRF) kann die Erkennungsrate (Recall) auf 62,9 % verbessert werden mit einer leicht geringeren Präzision, welche aus den Falsch-Detektionen des Detektors resultiert. Wenn Objekte jedoch zusätzlich mit einem Kalman-Filter getrackt werden, wird ein Erinnerungswert von 70,4 % mit einer Präzision von 57,8 % erzielt. Dies beweist, dass die Objektsegmentierung für die Auto-Objektklassen von dem Objektdetektor und zusätzlich von der dynamischen Modellierung mit Hilfe eines Kalman-Filters profitiert. Dies ist eine vorteilhafte Ausgestaltung der Erfindung nach einem Ausführungsbeispiel.

Zusätzlich wird eine Verbesserung der Gesamt-Segmentierungsgenauigkeit beobachtet. Während Basis-CRFs (plain CRFs) eine Genauigkeit von 88,3 % erzielen, erreicht das Objekt-CRF 88,6 %, während ein zusätzlicher Einbezug von Objektdynamiken die Gesamt-Segmentierungsgenauigkeit weiter auf 88,7 % verbessert. Der relative Wert von 0,4 % mag gering erscheinen, aber wenn man berücksichtigt, dass die Datenbank insgesamt nur 1,3 % Auto-Pixel enthält, ist dies einiges wert. Daher wird der Schluss gezogen, dass nicht nur die Segmentierung für die Auto-Klasse verbessert wird, sondern auch die Gesamt-Szenensegmentierungsqualität.

Wenn zusätzlich die Szenendynamiken modelliert werden und Postirior-Verteilung über die Zeit propagiert werden (dynamisches CRF), dann wird wieder eine Verbesserung des erreichten Erinnerungswertes mit den zusätzlichen Objektknoten von 25,5% auf 75,7% beobachtet. Und auch das Model der Objektdynamiken kann die Erkennungsrate auf 78,0% korrekt segmentierte Pixel weiter verbessern. Daher kann wieder gefolgert werden, dass das CRF-Modell beides auswertet, die Information, welche durch den Objektdetektor geliefert wird, wie auch die zusätzliche Objektdynamik, um die Segmentierungsqualität zu verbessern.

Wenn schließlich die Gesamtgenauigkeit analysiert wird während die Szenendynamik modelliert wird, wird ein geringfügiger Abfall im Vergleich zu einer statischen Modellierung beobachtet. Jedoch wird wiederum in übereinstimmender Weise beobachtet, dass die Objektinformation und deren Dynamik es erlauben, eine Verbesserung von 86,5 % ohne Objektinformation auf 87,1 % mit Objekt-CRFs und auf 88,1 % mit dem vollen Modell zu erzielen.

Die in übereinstimmender Weise leicht schlechtere Präzision und Gesamtgenauigkeit für die dynamischen Szenemodelle müssen erklärt werden: Nicht-Autopixel die fälschlicherweise als Auto segmentiert wurden sind hauptsächlich an der Objektgrenze angesiedelt, welche überwiegend ihre Ursache in Artefakten der Szenensegmentierung-Vorwärtspropagation haben. Diese werden durch Ungenauigkeiten des Geschwindigkeitsmessers eingebracht und aufgrund von den Ungenauigkeiten der Projektionsschätzung.

Eine Fehlermatrix (confusion matrix) für alle Klassen der Datenbank der dynamischen Szenen ist in Tabelle 4 dargestellt. Fig. 7 zeigt Beispieldetektionen und Szenensegmentierungen für die verschiedenen CRF-Modelle um den Einfluss der verschiedenen Modelle und ihrer Verbesserungen zu illustrieren. So wird beispielsweise in Beispiel (d) das Auto welches das Sichtfeld verlässt durch ein Basis-CRF (plain CRF) und Objekt-CRF überwiegend geglättet (smoothed out), während das dynamische CRF in der Lage ist, fast die gesamte Fläche korrekt zu klassifizieren. Zusätzlich werden die kleineren Autos, die von einem Basis-CRF geglättet werden, von dem Objekt-CRF und dem dynamischen CRF korrekt klassifiziert. Es ist auch festzustellen, dass falsche Objektdetektionen wie in Beispiel (c) nicht zu einer falschen Segmentierung der Szene führen.

| Tatsächl. Klasse | Anteil | Inferiert | Himmel | Straße | Fahrbahn-markierung | Bäume u. Büsche | Gras | Gebäude | Freifläche | Auto |
|---|---|---|---|---|---|---|---|---|---|---|
| Himmel | 10,4% | | 91,0 | 0,0 | 0,0 | 7,7 | 0,5 | 0,4 | 0,3 | 0,1 |

| Straße | 42,1% | | 0,0 | 95,7 | 1,0 | 0,3 | 1,1 | 0,1 | 0,5 | 1,3 |
|---|---|---|---|---|---|---|---|---|---|---|
| Fahrbahn-markierung | 1,9% | | 0,0 | 36,3 | 56,4 | 0,8 | 2,9 | 0,2 | 1,8 | 1,6 |
| Bäume u. Büsche | 29,2% | | 1,5 | 0,2 | 0,0 | 91,5 | 5,0 | 0,2 | 1,1 | 0,4 |
| Gras | 12,1% | | 0,4 | 5,7 | 0,5 | 13,4 | 75,3 | 0,3 | 3,5 | 0,9 |
| Gebäude | 0,3% | | 1,6 | 0,2 | 0,1 | 37,8 | 4,4 | 48,4 | 6,3 | 1,2 |
| Freifläche | 2,7% | | 6,4 | 15,9 | 4,1 | 27,7 | 29,1 | 1,4 | 10,6 | 4,8 |
| Auto | 1,3% | | 0,3 | 3,9 | 0,2 | 8,2 | 4,9 | 2,1 | 2,4 | 78,0 |

Tabelle 4: Fehlermatrix (confusion matrix) in Prozent für den Datensatz dynamischer Szenen; Einträge sind zeilennormalisiert

5 Schlussfolgerungen

Mit der vorliegenden Erfindung wird eine vereinheitlichende Modellanwendung für gemeinsame Szenen- und Objektklassensegmentierung bereitgestellt. Während CRFs die unäre pixelweise Klassifizierung von Szenen stark verbessern, tendieren sie dazu, kleinere Regionen und Objekte wie Autos in einer Landschaft auszuglätten (smooth out). Dies trifft speziell dann zu wenn Objekte nur einen geringen Teil der Menge der Gesamtpixel umfassen. Es wurde gezeigt, dass durch hinzufügen von Informationen höherer Lagen von einem HOG-Objektdetektor nach dem Stand der Technik dieses Defizit verbessert wird. Weitere Verbesserung - insbesondere wenn Objekte nur teilweise sichtbar sind - wird erzielt wenn Objektdynamiken richtig modelliert werden und wenn Szenensegmentierungsinformation über die Zeit propagiert wird. Die erzielte Verbesserung ist bidirektional, einerseits wird die Segmentierung der Objektklassen verbessert, aber andererseits profitieren auch die übrigen Szenenklassen von der zusätzlichen Informationsquelle.

Für die weiteren Arbeiten soll untersucht werden wie Beziehungen zwischen verschiedenen Objekten wie teilweise Verdeckung modelliert werden kann wenn eine Vielzahl von Objektklassen detektiert werden. Zusätzlich wird danach getrachtet, die Eigenbewegungsschätzung der Kamera zu verbessern um weiter die Leistungsfähigkeit zu verbessern. Schließlich wird davon ausgegangen, dass die Integration verschiedener Sensoren wie z.B. Radar eine weitere Verbesserung der Resultate erlaubt.

REFERENZEN

[1a] Navneet Dalal and Bill Triggs. Histograms of oriented gradients for human detection. In CVPR, 2005.
[2a] Antonio Torralba, Kevin P. Murphy, and William T. Freeman. Sharing features: Efficient boosting procedures for multiclass object detection. In CVPR, 2004.
[3a] John Winn and Jamie Shotton. The layout consistent random field for recognizing and segmenting partially occluded objects. In CVPR, 2006.
[4a] Christian Wojek and Bernt Schiele. A dynamic conditional random field model for joint labeling of object and scene classes. In ECCV, 2008.
[1] Everignham, M., Zlsserman, A. Williams, C., van Gool, L.: The pascal visual object class challenge results. Technical report, PASCAL Network (2006)
[2] Torralba, A.: Contextual priming for object detection. IJCV (2003) 169-191
[3] Hoiem, D., Efros, A.A., Hebert, M.: Putting objects in perspective. In: CVPR. (2006)
[4] He, X., Zemel, R.S., Carreira-Perpiñán, M.A.: Multiscale conditional random fields for image labelling. In: CVPR. (2004)
[5] Kumar, S., Hebert, M.: A hierarchical field framework for unified context-based classification. In: ICCV. (2005)

[6] Shotton, J., Winn, J., Rother, C., Criminisi, A.: Textonboost: Joint appearance shape and context modelling for multi-class object recognition and segmentation. In: ECCV. (2006)

[7] Torralba, A., Murphy, K.P., Freeman, W.T.: Contextual models for object detection using boosted random fields. In: NIPS. (2004)

[8] McCallum, A., Rohanimasnesh, K. Sutton, C.: Dynamic conditional random fields for jointly labeling multiple sequences. In: NIPS Workshop on Syntax, Semantics. (2003)

[9] Lafferty, J.D., McCallum, A., Pereira, F.C.N.: Conditional random fields: Probabilistic models for segmenting and labeling sequence data. In: ICML. (2001)

[10] Kumar, S., Hebert, M.: Discriminative random fields: A discriminative framework for contextual interaction in classification. In: ICCV. (2003)

[11] Dalal, N., Triggs, B.: Histograms of oriented gradients for human detection. In: CVPR. (2005)

[12] Verbeek, J., Triggs, B.: Region classification with markov field aspect models. In: CVPR. (2007)

[13] Quattoni, A., Collins, M., Darrell, T.: Conditional random fields for object recognition. In: NIPS (2004)

[14] Kapoor, A., Winn, J.: Located hidden random fields: Learning discriminative parts for object recognition. In: ECCV. (2006)

[15] Winn, J., Shotton, J.: The layout consistent random field for recognizing and segmenting partially occluded objects. In: CVPR. (2006)

[16] Wang, Y., Ji, Q.: A dynamic conditional random field model for object segmentation in image sequences. In: CVPR. (2005)

[17] Yin, Z., Collins, R.: Belief propagation in a 3D spatio-temporal MRF for moving object detection. In: CVPR. (2007)

[18] Leibe, B., Cornelis, N., Cornelis, K., Gool, L.V.: Dynamic 3D scene analysis form a moving vehicle. In: CVPR. (2007)

[19] Torralba, A., Murphy, K.P., Freeeman, W.T.: Sharing features: Efficient boosting procedures for multiclass object detection. In: CVPR. (2004)

[20] Platt, J.: Probabilistic outputs for support vector machines and comparison to regularized likelihood methods. In Smola, A.J., Bartlett, P., Schoelkopf, B., Schuurmans, D., eds.: Advances in Large Margin Classifiers. (2000) 61-74

[21] Kalman, R.E.: A new approach to linear filtering and prediction problems. Transactions oft the ASME-Joumal of Basic Engineering 82 (1960) 35-45

[22] Sutton, C., McCallum, A.: Piecewise training for undirected models. In: 21 th Annual Conference on Uncertainty in Artificial Intelligence (UAI-05). (2005)

[23] Vishwanathan, S.V.N., Schraudolph, N.N., Schmidt, M.W., Murphy, K.P.: Accelerated training of conditional random fields with stochastic gradient methods. In: ICML. (2006)

[24] Hel-Or, Y., Hel-Or, H.: Real-time pattern matching using projection kernels. PAMI 27 (2005) 1430-1445

[25] Alon, Y., Ferencz, A., Shashua, A.: Off-road path following using region classification and geometric projection constraints. In: CVPR. (2006)

[26] Varma, M., Zisserman, A.: Classifying images of materials: Achieving viewpoint and illumination independence. In: ECCV. (2002)

[27] Russel, B.C., Torralba, A., Murphy, K.P., Freeman, W.T.: LabelMe: A database and web-based tool for image annotation. IJCV 77 (2008) 157-173

BEZUGSZEICHEN

| | |
|---|---|
| 1 | Fahrzeug |
| 2 | weiteres Fahrzeug |
| 3 | Straße |
| 4 | Objektdetektions-Einrichtung |
| 5 | Sensorik |
| 6 | Datenverarbeitungs- und/oder Auswerte-Einrichtung |
| 7 | Datenspeichervorrichtung |
| 8 | weitere Systeme |
| O | Objekt |
| $o^t_n$ | Objektknoten |
| $\Omega$ | Objektpotential |
| A | Kantenpotential |
| $\Psi$ | Kantenpotential |
| $\Phi$ | unäres Potential |

**Patentansprüche**

1. Verfahren zur Analyse von Umgebungsobjekten und/oder Umgebungsszenen mit einer Auswerteeinheit, wobei in der Auswerteeinheit Bilddaten ($x^t$) basierend auf einem CRF-Modell, conditional random Field -Modell, ausgewertet werden und das CRF-Modell zusätzliche Objektknoten ($o^t_n$) vorsieht, die Informationen aus einem Objektdetektor berücksichtigen, wobei
Objekte (O) und Szenen in einem gemeinsamen Segmentierungs-Schritt modelliert werden, wobei die Modellierung auf zwei verschiedenen Modell-Lagen mit verschiedener Informationskörnigkeit und verschiedenen Segmentierungen in einem dynamischen CRF-Modell erfolgt und wobei zumindest eine zweite Modell-Lage mit reduzierter Informationskörnigkeit verwendet wird um Objektknoten ($o^t_n$) zu repräsentieren
wobei das Verfahren auf Basis von dynamischen Bildsequenzen durchgeführt wird, die Objekte (O) beliebiger Größe enthalten, wobei Objekte und verbleibende Szene unterschiedlich modelliest werden.

2. Verfahren gemäß Anspruch 1
**dadurch gekennzeichnet, dass**
im Rahmen der Analyse von Umgebungsobjekten und/oder Umgebungsszenen eine Modellierung von Nachbarschaftsbeziehungen ($N_2$, $N_3$) von Knoten des CRF-Modells erfolgt.

3. Verfahren gemäß Anspruch 2,
**dadurch gekennzeichnet, dass**
die Modellierung von Nachbarschaftsbeziehungen ($N_2$, $N_3$) durch Kantenpotentiale erfolgt.

4. Verfahren gemäß einem der Ansprüche 1 bis 3,
**dadurch gekennzeichnet, dass**
im Rahmen der Analyse von Umgebungsobjekten und/oder Umgebungsszenen zusätzlich eine Support Vektor Maschine zur Objektdetektion und/oder zur Objektklassifizierung verwendet wird.

5. Verfahren gemäß einem der Ansprüche 1 bis 4,
**dadurch gekennzeichnet, dass**
aufbauend auf dem CRF-Modell im Rahmen der Objektdetektion und/oder der Szenenklassifizierung bewegte Kameras und/oder bewegte Objekte (O) modelliert werden.

6. Verfahren gemäß einem der Ansprüche 1 bis 5,
**dadurch gekennzeichnet, dass**
eine pixelweise Objekt- und/oder Szenenklassensegmentierung erfolgt.

7. Verfahren gemäß einem der Ansprüche 1 bis 6,
**dadurch gekennzeichnet, dass**
Objekte (O) beliebiger Größe in ein CRF-Framework integriert werden, und Inferenz gemeinsam für Objekte (O) und Kontext und/oder Szenenklassen ausgeführt wird.

8. Verfahren gemäß einem der Ansprüche 1 bis 7,
**dadurch gekennzeichnet, dass**
Kantenpotentiale dadurch modelliert werden, dass eine von einem Objektdetektor gelieferte Skala berücksichtigt oder ausgewertet wird.

9. Objektdetektions-Einrichtung (4) zur Analyse von Umgebungsobjekten und/oder Umgebungsszenen mit einer Datenverarbeitungs- und/oder Auswerte-Einrichtung (6), wobei in der Datenverarbeitungs- und/oder Auswerte-Einrichtung (6) Bilddaten ($x^t$) basierend auf einem CRF-Modell, Conditional Random Field -Modell, ausgewertet werden und das CRF-Modell zusätzliche Objektknoten ($o^t_n$) vorsieht, die Informationen aus einem Objekdetektor berücksichtigen, wobei Objekte (O) und Szenen in einem gemeinsamen Segmentierungs-Schritt modelliert werden, wobei die Modellierung auf zwei verschiedenen Modell-Lagen mit verschiedener Informationskörnigkeit und verschiedenen Segmentierungen in einem dynamischen CRF-Modell erfolgt und wobei zumindest eine zweite Modell-Lage mit reduzierter Informationskörnigkeit verwendet wird um Objektknoten ($o^t_n$) zu repräsentieren;
wobei das Verfahren auf Basis von dynamischen Bildsequenzen durchgeführt wird, die Objekte (O) beliebiger Größe enthalten, wobei Objekte und verbleibende Szene unterschiedlich modelliest werden.

10. Fahrzeug mit einer Objektdetektions-Einrichtung (4) zur Analyse von Umgebungsobjekten und/oder Umgebungsszenen nach anspruch 9 insbesondere ausgebildet zur Durchführung eines Verfahrens nach einem der Ansprüche 1 bis 8, mit einer Datenverarbeitungs- und/oder Auswerte-Einrichtung (6), wobei in der Datenverarbeitungs- und/oder Auswerte-Einrichtung (6) Bilddaten ($x^t$) basierend auf einem CRF-Modell ausgewertet werden und das CRF-Modell zusätzliche Objektknoten ($o^t_n$) vorsieht, die Informationen aus einem Objekdetektor ($\Omega$) berücksichtigen, mit einer Datenspeichervorrichtung (7) zur Speicherung von Bilddaten, die mit der Objektdetektions-Einrichtung (4) und/oder mit der Datenverarbeitungs- und/oder Auswerte-Einrichtung (6) datentechnisch verbunden ist.

**11.** Objektdetektions-Einrichtung nach einem der Ansprüche 9 oder 10,
**dadurch gekennzeichnet, dass**
die Objektdetektions-Einrichtung (4) in eine Kamera-Einrichtung oder in eine SensorEinrichtung (5) integriert ist.

**Claims**

**1.** A method for analyzing surrounding objects and/or surrounding scenes by means of an evaluation unit, wherein image data ($x^t$) is evaluated in said evaluation unit on the basis of a CRF model, Conditional Random Field model, and said CRF model includes additional object nodes ($o^t_n$) that take into account information provided by an object detector, wherein objects (O) and scenes are modelled in a shared segmentation step, wherein modelling is done on two different model layers with different information granularity and different segmentations in a dynamic CRF model, and wherein at least one second model layer with reduced information granularity is used to represent object nodes ($o^t_n$),
wherein the method is carried out on the basis of dynamic picture sequences containing objects (O) of any size, wherein said objects and the remaining scene are modelled differently.

**2.** The method according to claim 1,
**characterized in that**
the analysis of surrounding objects and/or surrounding scenes includes modelling of neighbourhood relations ($N_2$, $N_3$) of nodes of the CRF model.

**3.** The method according to claim 2,
**characterized in that**
said modelling of neighbourhood relations ($N_2$, $N_3$) is done by means of edge potentials.

**4.** The method according to any one of claims 1 to 3,
**characterized in that**
the analysis of surrounding objects and/or surrounding scenes additionally includes the use of a support vector machine for object detection and/or for object classification.

**5.** A method according to any one of claims 1 to 4,
**characterized in that**
based on the CRF model, the object detection and/or scene classification include(s) modelling of moving cameras and/or moving objects (O).

**6.** The method according to any one of claims 1 to 5,
**characterized in that**
object and/or scene class segmenting is/are done pixel by pixel.

**7.** The method according to any one of claims 1 to 6,
**characterized in that**
objects (O) of any size are integrated in a CRF framework, and interference is done jointly for objects (O) and context and/or scene classes.

**8.** The method according to any one of claims 1 to 7,
**characterized in that**
edge potentials are modelled by taking into account or evaluating a scale provided by an object detector.

**9.** An object detection device (4) for analyzing surrounding objects and/or surrounding scenes by means of a data processing and/or evaluation device (6), wherein image data ($x^t$) is evaluated in said data processing and/or evaluation device (6) on the basis of a CRF model, Conditional Random Field model, and said CRF model includes additional object nodes ($o^t_n$) that take into account information provided by an object detector, wherein objects (O) and scenes are modelled in a shared segmentation step, wherein modelling is done on two different model layers with different information granularity and different segmentations in a dynamic CRF model, and wherein at least one second model layer with reduced information granularity is used to represent object nodes ($o^t_n$), wherein the method is carried out on the basis of dynamic picture sequences containing objects (O) of any size, wherein said objects and the remaining scene are modelled differently.

10. A vehicle comprising an object detection device (4) for analyzing surrounding objects and/or surrounding scenes according to Claim 9, in particular designed to carry out a method according to any one of Claims 1 to 8, comprising a data processing and/or evaluation device (6), wherein image data ($x^t$) is evaluated in said data processing and/or evaluation device (6) on the basis of a CRF model, and said CRF model includes additional object nodes ($o^t_n$) that take into account information provided by an object detector ($\Omega$), comprising a data storage device (7) that serves to store image data and is connected to the object detection device (4) and/or to the data processing and/or evaluation device (6) by means of data transmission means.

11. Object detection device according to either of claims 9 or 10,
**characterized in that**
the object detection device (4) is integrated in a camera device or in a sensor device (5).

## Revendications

1. Procédé d'analyse d'objets ambiants et/ou de scènes ambiantes avec une unité d'analyse, des données d'images ($x^t$) étant analysées dans l'unité d'analyse sur la base d'un modèle CRF, modèle Conditional Random Field, et le modèle CRF prévoyant des noeuds d'objets ($o^t_n$) supplémentaires qui prennent en compte les informations provenant d'un détecteur d'objets,
des objets (O) et des scènes étant modélisés dans une étape de segmentation commune, la modélisation s'effectuant sur deux couches de modèle différentes avec une granularité de l'information différente et différentes segmentations dans un modèle CRF dynamique, et
au moins une deuxième couche de modèle avec une granularité de l'information réduite étant utilisée pour représenter des noeuds d'objet ($o^t_n$), le procédé étant réalisé sur la base de séquences d'images dynamiques qui contiennent des objets (O) de grandeur quelconque, des objets et des scènes restantes étant modélisés de façon différente.

2. Procédé selon la revendication 1,
**caractérisé en ce que**,
dans le cadre de l'analyse d'objets ambiants et/ou de scènes ambiantes, il est effectué une modélisation de relations de voisinage ($N_2$, $N_3$) de noeuds du modèle CRF.

3. Procédé selon la revendication 2,
**caractérisé en ce que**
la modélisation de relations de voisinage ($N_2$, $N_3$) est effectuée par des potentiels de marge.

4. Procédé selon une des revendications 1 à 3,
**caractérisé en ce que**,
dans le cadre de l'analyse d'objets ambiants et/ou de scènes ambiantes, il est en plus utilisé un séparateur à vaste marge pour la détection d'objets et/ou pour la classification d'objets.

5. Procédé selon une des revendications 1 à 4,
**caractérisé en ce que**,
sur la base du modèle CRF dans le cadre de la détection d'objets et/ou de la classification de scènes, des caméras mobiles et/ou des objets mobiles (O) sont modélisés.

6. Procédé selon une des revendications 1 à 5,
**caractérisé en ce**
**qu'**une segmentation par pixels d'objets et/ou de scènes est effectuée.

7. Procédé selon une des revendications 1 à 6,

**caractérisé en ce que**

des objets (O) de grandeur quelconque sont intégrés dans un CRF-Framework et **en ce qu'**une inférence est effectuée en commun pour des objets (O) et un contexte et/ou des classes de scènes.

8. Procédé selon une des revendications 1 à 7,
   **caractérisé en ce que**,
   les potentiels de marge sont modélisés par le fait qu'une échelle fournie par un détecteur d'objets est prise en compte ou analysée.

9. Equipement de détection d'objets (4) pour l'analyse d'objets ambiants et/ou de scènes ambiantes avec un équipement de traitement et/ou d'analyse de données (6), des données d'images ($x^t$) étant, dans l'équipement de traitement et/ou d'analyse de données (6), analysées sur la base d'un modèle CRF, modèle Conditional Random Field, et le modèle CRF prévoyant des noeuds d'objets ($o^t_n$) supplémentaires qui prennent en compte les informations provenant d'un détecteur d'objets,
   des objets (O) et des scènes étant modélisés dans une étape de segmentation commune, la modélisation s'effectuant sur deux couches de modèle différentes avec une granularité de l'information différente et différentes segmentations dans un modèle CRF dynamique, et
   au moins une deuxième couche de modèle avec une granularité de l'information réduite étant utilisée pour représenter des noeuds d'objets ($o^t_n$), le procédé étant réalisé sur la base de séquences d'images dynamiques qui contiennent des objets (O) de grandeur quelconque, des objets et des scènes restantes étant modélisés de façon différente.

10. Véhicule avec un équipement de détection d'objets (4) pour l'analyse d'objets ambiants et/ou de scènes ambiantes selon la revendication 9, en particulier constitué pour la réalisation d'un procédé selon une des revendications 1 à 8, avec équipement de traitement et/ou d'analyse de données (6), des données d'images ($x^t$) étant analysées dans l'équipement de traitement et/ou d'analyse de données (6) sur la base d'un modèle CRF, et le modèle CRF prévoyant des noeuds d'objet ($o^t_n$) supplémentaires qui prennent en compte des informations en provenance d'un détecteur d'objets ($\Omega$), avec un dispositif d'enregistrement de données (7) pour l'enregistrement de données d'images qui est raccordé, par une technique de données, à l'équipement de détection d'objets (4) et/ou à l'équipement de traitement et/ou d'analyse de données (6).

11. Equipement de détection d'objets selon une des revendications 9 ou 10,
    **caractérisé en ce que**
    l'équipement de détection d'objets (4) est intégré dans un équipement de caméra ou dans un équipement de capteur (5).

**Figur 1**

EP 2 368 216 B1

**Figur 2**

Fig. 3

**Fig. 4**

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **NAVNEET DALAL ; BILL TRIGGS.** Histograms of oriented gradients for human detection. *CVPR,* 2005
- **ANTONIO TORRALBA ; KEVIN P. MURPHY ; WILLIAM T. FREEMAN.** Sharing features: Efficient boosting procedures for multiclass object detection. *CVPR,* 2004
- **JOHN WINN ; JAMIE SHOTTON.** The layout consistent random field for recognizing and segmenting partially occluded objects. *CVPR,* 2006
- **CHRISTIAN WOJEK ; BERNT SCHIELE.** A dynamic conditional random field model for joint labeling of object and scene classes. *ECCV,* 2008
- The pascal visual object class challenge results. **EVERIGNHAM, M. ; ZLSSERMAN, A. ; WILLIAMS, C. ; VAN GOOL, L.** Technical report. PASCAL Network, 2006
- **TORRALBA, A.** Contextual priming for object detection. *IJCV,* 2003, 169-191
- **HOIEM, D. ; EFROS, A.A. ; HEBERT, M.** Putting objects in perspective. *CVPR,* 2006
- **HE, X. ; ZEMEL, R.S. ; CARREIRA-PERPIÑÁN, M.A.** Multiscale conditional random fields for image labelling. *CVPR,* 2004
- **KUMAR, S. ; HEBERT, M.** A hierarchical field framework for unified context-based classification. *ICCV,* 2005
- **SHOTTON, J. ; WINN, J. ; ROTHER, C. ; CRIMINISI, A.** Textonboost: Joint appearance shape and context modelling for multi-class object recognition and segmentation. *ECCV,* 2006
- **TORRALBA, A. ; MURPHY, K.P. ; FREEMAN, W.T.** Contextual models for object detection using boosted random fields. *NIPS,* 2004
- Dynamic conditional random fields for jointly labeling multiple sequences. **MCCALLUM, A. ; ROHANIMASNESH, K. ; SUTTON, C.** NIPS Workshop on Syntax. Semantics, 2003
- **LAFFERTY, J.D. ; MCCALLUM, A. ; PEREIRA, F.C.N.** Conditional random fields: Probabilistic models for segmenting and labeling sequence data. *ICML,* 2001
- **KUMAR, S. ; HEBERT, M.** Discriminative random fields: A discriminative framework for contextual interaction in classification. *ICCV,* 2003
- **DALAL, N. ; TRIGGS, B.** Histograms of oriented gradients for human detection. *CVPR,* 2005
- **VERBEEK, J. ; TRIGGS, B.** Region classification with markov field aspect models. *CVPR,* 2007
- **QUATTONI, A. ; COLLINS, M. ; DARRELL, T.** Conditional random fields for object recognition. *NIPS,* 2004
- **KAPOOR, A. ; WINN, J.** Located hidden random fields: Learning discriminative parts for object recognition. *ECCV,* 2006
- **WINN, J. ; SHOTTON, J.** The layout consistent random field for recognizing and segmenting partially occluded objects. *CVPR,* 2006
- **WANG, Y. ; JI, Q.** A dynamic conditional random field model for object segmentation in image sequences. *CVPR,* 2005
- **YIN, Z. ; COLLINS, R.** Belief propagation in a 3D spatio-temporal MRF for moving object detection. *CVPR,* 2007
- **LEIBE, B. ; CORNELIS, N. ; CORNELIS, K. ; GOOL, L.V.** Dynamic 3D scene analysis form a moving vehicle. *CVPR,* 2007
- **TORRALBA, A. ; MURPHY, K.P. ; FREEEMAN, W.T.** Sharing features: Efficient boosting procedures for multiclass object detection. *CVPR,* 2004
- Probabilistic outputs for support vector machines and comparison to regularized likelihood methods. **PLATT, J.** Advances in Large Margin Classifiers. 2000, 61-74
- **KALMAN, R.E.** A new approach to linear filtering and prediction problems. *Transactions oft the ASME-Joumal of Basic Engineering,* 1960, vol. 82, 35-45
- **SUTTON, C. ; MCCALLUM, A.** Piecewise training for undirected models. *21 th Annual Conference on Uncertainty in Artificial Intelligence (UAI-05,* 2005
- **VISHWANATHAN, S.V.N. ; SCHRAUDOLPH, N.N. ; SCHMIDT, M.W. ; MURPHY, K.P.** Accelerated training of conditional random fields with stochastic gradient methods. *ICML,* 2006
- **HEL-OR, Y. ; HEL-OR, H.** Real-time pattern matching using projection kernels. *PAMI,* 2005, vol. 27, 1430-1445
- **ALON, Y. ; FERENCZ, A. ; SHASHUA, A.** Off-road path following using region classification and geometric projection constraints. *CVPR,* 2006
- **VARMA, M. ; ZISSERMAN, A.** Classifying images of materials: Achieving viewpoint and illumination independence. *ECCV,* 2002
- **RUSSEL, B.C. ; TORRALBA, A. ; MURPHY, K.P. ; FREEMAN, W.T.** LabelMe: A database and web-based tool for image annotation. *IJCV,* 2008, vol. 77, 157-173